(19) Europäisches Patentamt
European Patent Office
Office européen des brevets

(11) **EP 2 977 362 A1**

(12) **EUROPEAN PATENT APPLICATION**
published in accordance with Art. 153(4) EPC

(43) Date of publication:
**27.01.2016 Bulletin 2016/04**

(51) Int Cl.:
***C03C 27/12*** *(2006.01)*

(21) Application number: **14778367.4**

(22) Date of filing: **18.03.2014**

(86) International application number:
**PCT/JP2014/057243**

(87) International publication number:
**WO 2014/162864 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.04.2013 JP 2013076705**

(71) Applicant: **Konica Minolta, Inc.**
**Tokyo 100-7015 (JP)**

(72) Inventor: **SAITO, Makiko**
**Tokyo 100-7015 (JP)**

(74) Representative: **Gille Hrabal**
**Brucknerstrasse 20**
**40593 Düsseldorf (DE)**

(54) **HEAT RAY SHIELDING LAMINATED GLASS AND MANUFACTURING METHOD FOR HEAT RAY SHIELDING LAMINATED GLASS**

(57) An object of the present invention is to provide a heat ray shielding laminated glass which has excellent flatness and adhesion between a glass substrate and a heat ray shielding film unit, and has a reduced glass scattering rate even when the glass substrate is damaged by an external impact, and a manufacturing method therefor.

The heat ray shielding laminated glass of the present invention is a heat ray shielding laminated glass which is formed by press bonding of a pair of glass substrates on both surfaces of a heat ray shielding film unit A, which has a heat ray shielding film having at least one heat ray shielding layer on a transparent resin film and at least one adhesive layer, the heat ray shielding laminated glass being characterized in that the heat ray shielding film unit A has an average moisture content 1.0% by mass or less as determined by TG-DTA (simultaneous measurement of thermogravimetry differential thermal analysis).

**FIG.1B**

EP 2 977 362 A1

**Description**

Technical Field

The present invention relates to a heat ray shielding laminated glass having a high effect of preventing scattering, and a method for manufacturing a heat ray shielding laminated glass.

Background Art

Recently, for the purpose of preventing a skin burning sensation caused by sunlight which enters a car through a car window or saving energy by suppressing working ratio of a car air conditioner, a laminated glass having high heat insulating property or heat ray shielding property is commercially available on the market. As for the laminated glass used for such purpose, it is generally known that a heat ray shielding film unit is disposed between a pair of glass substrates, and according to shielding of transmission of heat ray (infrared ray) among sun lights by this heat ray shielding film unit, an increase in indoor temperature or air conditioning load can be lowered.

As a representative step for manufacturing the laminated glass, there are a lamination step in which a glass substrate, an adhesive layer, a heat ray shielding film, an adhesive layer, and a glass substrate as a constitutional member are laminated in the order to obtain a laminate, a preliminary press bonding step mainly for deaeration between each constitutional member, and a main press bonding step in which the glass substrate and the heat ray reflective film are fully adhered by an adhesive layer (for example, an adhesive film) to obtain a laminated glass as a final product.

The preliminary press bonding step is carried out by, for example, after adding a laminate in a vacuum bag like a rubber bag, heating in the temperature range of 70°C to 130°C with aspiration under reduced pressure. Furthermore, the main press bonding step is carried out by, for example, after adding a preliminarily press-bonded laminate in an autoclave, heating and pressurizing in the temperature range of 120°C to 150°C under heat and pressure.

In general, the laminated glass which has a heat ray reflective film unit as mediated by an adhesive layer exhibits no scattering of glass debris even when it is damaged by an external impact, and thus safe. Accordingly, it has been widely used for an automobile, an airplane, or constructional application. The laminated glass therefor is required to have high penetration resistance and scattering preventing property of glass, and the performance of the laminated glass depends on the adhesive force of a heat ray shielding film unit to a glass substrate.

Namely, for a laminated glass in which the adhesive force between a glass substrate and a heat ray shielding film unit, in particular, an adhesive layer formed on a surface of a heat ray shielding film unit, is excessively low, the glass is detached and scattered from an adhesive, layer by an external impact.

The adhesion property between a glass substrate and a heat ray shielding film unit is mainly related to the moisture content in the heat ray shielding film unit. When the moisture content is high in the heat ray shielding film unit, the adhesive force between the heat ray shielding film unit and glass is lowered so that, when damaged, glass debris is easily scattered.

In general, a laminated glass is manufactured by heating and press bonding a heat ray shielding film unit having a glass substrate and an adhesive layer at a temperature at which the adhesive layer formed of polyvinyl butyral or the like is sufficiently softened, for example, in the temperature range of 90 to 150°C.

However, when the heating and press bonding are performed in the above temperature range, moisture contained in the adhesive layer evaporates and diffuses, and thus a foaming phenomenon may easily occur on a surface of the adhesive layer. The moisture content in an adhesive layer is also related to the adhesion property to a glass substrate. Thus, when the moisture content is high in the adhesive layer, the adhesion property to a glass substrate is lowered. With such laminated glass having lower adhesive force, when an impact is applied from an outside, the glass substrate is damaged and broken glass debris is detached from the adhesive layer, yielding scattered debris.

Similarly, a heat ray shielding film having a heat ray shielding layer (for example, a laminae in which plural low refractive index layers and high refractive index layers are laminated), which is formed by a water-based wet coating method using a water soluble binder on a transparent resin film, is in a state in which a significant amount of water is contained according to drying conditions after lamination or a storage environment until adhesion with a glass substrate after manufacture.

When a laminated glass is manufactured by forming an adhesive layer on a heat ray shielding film in such state and sandwiching it with a glass substrate and then heated in the temperature range of 90 to 150°C, moisture in the heat ray shielding film evaporates and diffuses to the adhesive layer, thus yielding foaming on the glass substrate interface. As a result, the adhesive force to a glass substrate is lowered as described above. According to the laminated glass with lowered adhesive force, a glass substrate damaged by an external impact is detached from an adhesive layer and scattered as described above.

With regard to the problem described above, a method of applying a resin composition containing a copolymer of α-olefin and an ethylenically unsaturated silane compound as an intermediate film of a laminated glass is disclosed (see, Patent Literature 1, for example). According to the method described in Patent Literature 1, it is described that moisture management is unnecessary during a step for manufacturing a laminated glass, and thus it is possible to achieve high productivity. However, from the viewpoint of having each function, various constitutional materials other than a resin composition are used for manufacturing of a heat ray shielding film and thus there are still problems that, due to an influence of the moisture content in those constitutional materials or the like, the adhesion property and durability are impaired.

Furthermore, as an intermediate film constituting a laminated glass, disclosed is a laminated glass in which a thermoplastic resin sheet with moisture content of 0.3% by mass or less is used (see, Patent Literature 2, for example). According to the method described Patent Literature 2, it is described that, as autoclave is not required during the manufacture, a laminated glass having excellent transparency, adhesion property, penetration resistance, and weather resistance can be obtained. However, with regard to the method in which only the intermediate film described in Patent Literature 2 is used, a heat ray shielding laminated glass including a heat ray shielding film, which has a heat insulating or heat ray shielding property and consists of plural functional layers to be used for an automobile or the like, is unsatisfactory in terms of heat insulating property, heat ray shielding property, adhesion property, and water resistance. As such, a more strict moisture management is required therefor.

Also disclosed is a method for controlling moisture content by performing a heat treatment at specific conditions after molding an intermediate film for a laminated glass which contains a thermoplastic resin and an adhesive force modifier (see, Patent Literature 3, for example). However, according to the method disclosed in Patent Literature 3, the intermediate layer is composed only of a resin composition for the purpose of preventing scattering of glass debris, and the desired function is different from a heat ray shielding film with heat insulating or heat ray shielding property as being related to heat ray shielding used for an automobile or the like. Furthermore, the laminated glass is insufficient in terms of the adhesion property and water resistance.

Citation List

Patent Literatures

Patent Literature 1: JP 2011-73943 A
Patent Literature 2: JP 2001-226153 A
Patent Literature 3: JP 5-319875 A

Summary of Invention

Technical Problem

The present invention is devised under the circumstances described above, and an object thereof is to provide a heat ray shielding laminated glass which has excellent flatness and adhesion property between a glass substrate and a heat ray shielding film unit and has a reduced glass scattering rate even when the glass substrate is damaged by an external impact, and a manufacturing method therefor.

Solution to Problem

Under the circumstances, as a result of conducting intensive studies, the inventors of the present invention found that, with a heat ray shielding laminated glass having a constitution that both surfaces of a heat ray shielding film unit A with a heat ray shielding film having at least one heat ray shielding layer on a transparent resin film, and at least one adhesive layer are sandwiched by a pair of glass substrates, in which the heat ray shielding laminated glass is manufactured such that the moisture content of the heat ray shielding film unit A is controlled to a specific range or lower, a heat ray shielding laminated glass which has excellent flatness and adhesion property between a glass substrate and a heat ray shielding film unit and has a reduced glass scattering rate even when the glass substrate is damaged by an external impact can be provided. The present invention is achieved accordingly.

Namely, the above subject of the present invention is achieved by the following means.

1. A heat ray shielding laminated glass formed by press bonding of a pair of glass substrates on both surfaces of a heat ray shielding film unit A including a heat ray shielding film having at least one heat ray shielding layer on a transparent resin film, and at least one adhesive layer, wherein the heat ray shielding film unit A has an average moisture content of 1.0% by mass or less as determined by TG-DTA (simultaneous measurement of thermogravimetry differential thermal analysis).

2. The heat ray shielding laminated glass according to Item. 1, wherein the average moisture content of the heat ray shielding film unit A is 1.0% by mass or less as determined by TG-DTA before press bonding with the glass substrate.

3. The heat ray shielding laminated glass according to Item. 1 or 2, wherein the average moisture content of the heat ray shielding film which constitutes the heat ray shielding film unit A is 1.0% by mass or less as determined by TG-DTA before press bonding with the glass substrate.

4. The heat ray shielding laminated glass according to any one of Items. 1 to 3, wherein the average moisture content of the heat ray shielding film unit A is 0.5% by mass or less as determined by TG-DTA .

5. The heat ray shielding laminated glass according to any one of Items. 1 to 4, wherein the heat ray shielding film unit A has a constitution of having the heat ray shielding film, which has a heat ray shielding layer on both surfaces of the transparent resin film, and an adhesive layer on each of the heat ray shielding layer.

6. The heat ray shielding laminated class according to any one of Items. 1 to 5, wherein the heat ray shielding layer is an infrared reflective layer containing a water soluble binder resin.

7. The heat ray shielding laminated glass according to Item. 6, wherein the infrared reflective layer further contains metal oxide particles.

8. A method for manufacturing a heat ray shielding laminated glass, the method including a step of producing a heat ray shielding film by forming at least one layer of a heat ray shielding layer on a transparent resin film, a step of producing the heat ray shielding film unit A by forming an adhesive layer on at least one surface of the heat ray shielding film, a step of pseudo-press bonding by disposing a glass substrate on both surfaces of the heat ray shielding film unit A, and a step of main press bonding by performing a heat and pressure treatment of members which have been subjected to pseudo-press bonding to produce a heat ray shielding laminated glass, wherein a step for preliminary heating the heat ray shielding film or the heat ray shielding film unit A is included, and the preliminary heating step is a step in which the heat ray shielding film or the heat ray shielding film unit A is heated such that the average moisture content of the heat ray shielding film unit A, which is obtained by TG-DTA after forming the heat ray shielding laminated glass, is 1.0% by mass or less.

9. The method for manufacturing a heat ray shielding laminated glass according to Item. 8, wherein the average moisture content of the heat ray shielding film unit A is 1.0% by mass or less as determined by TG-DTA before the step for pseudo-press bonding with the glass substrate.

10. The method for manufacturing a heat ray shielding laminated glass according to Item. 8 or 9, wherein the average moisture content of the heat ray shielding film which constitutes the heat ray shielding film unit A is 1.0% by mass or less as determined by TG-DTA before press bonding with the glass substrate.

11. The method for manufacturing a heat ray shielding laminated glass according to any one of Items. 8 to 10, wherein the average moisture content of the heat ray shielding film unit A after forming the heat ray shielding laminated glass is 0.5% by mass or less as determined by TG-DTA .

12. The method for manufacturing a heat ray shielding laminated glass according to any one of Items. 8 to 11, wherein the preliminary heating temperature for the heat ray shielding film or the heat ray shielding film unit A during the preliminary heating step is in the temperature range of (Tg - 30°C) to (Tg + 10°C) when the glass transition temperature of a transparent resin film constituting the heat ray shielding film is Tg.

Advantageous Effects of Invention

According to the above means of the present invention, it is possible to provide a heat ray shielding laminated glass which has excellent flatness and adhesion property between a glass substrate and a heat ray shielding film unit and has a reduced glass scattering rate even when the glass substrate is damaged by an external impact, and also a manufacturing method therefor.

Brief Description of Drawings

Fig. 1A is a schematic cross-sectional view illustrating an exemplary constitution of a heat ray shielding laminated glass of the present invention.
Fig. 1B is a schematic cross-sectional view illustrating another exemplary constitution of the heat ray shielding laminated glass of the present invention.
Fig. 2 is a process flow chart illustrating an exemplary method for manufacturing a heat ray shielding laminated glass of the present invention.
Fig. 3 is a process flow chart illustrating another exemplary method for manufacturing a heat ray shielding laminated glass of the present invention.

Description of Embodiments

The heat ray shielding laminated glass of the present invention has a constitution that a pair of glass substrates is attached by press bonding on both surfaces of a heat ray shielding film unit A with a heat ray shielding film having at least one heat ray shielding layer on a transparent resin film, and at least one adhesive layer, and the heat ray shielding laminated glass is characterized in that the average moisture content of the heat ray shielding film unit A is 1.0% by mass or less. This characteristic is a technical characteristic that is common to the inventions of Item. 1 to Item. 12.

According to one embodiment of the present invention, from the viewpoint of better exhibition of the effect that is desired by the present invention, the average moisture content of the heat ray shielding film unit A, which is obtained by TG-DTA before press bonding with a glass substrate, is preferably 1.0% by mass or less from the viewpoint of lowering the rate of glass scattering caused by an external impact.

Furthermore, it is preferable that the average moisture content of the heat ray shielding film constituting the heat ray shielding film unit A, which is obtained by TG-DTA before press bonding with a glass substrate, is 1.0% by mass or less from the viewpoint of having more enhanced adhesion property so as to lower the rate of glass scattering caused by an external impact.

Furthermore, it is preferable that the average moisture content of the heat ray shielding film unit A, which is obtained by TG-DTA, is 0.5% by mass or less from the viewpoints of having more enhanced adhesion property so as to lower the rate of glass scattering caused by an external impact.

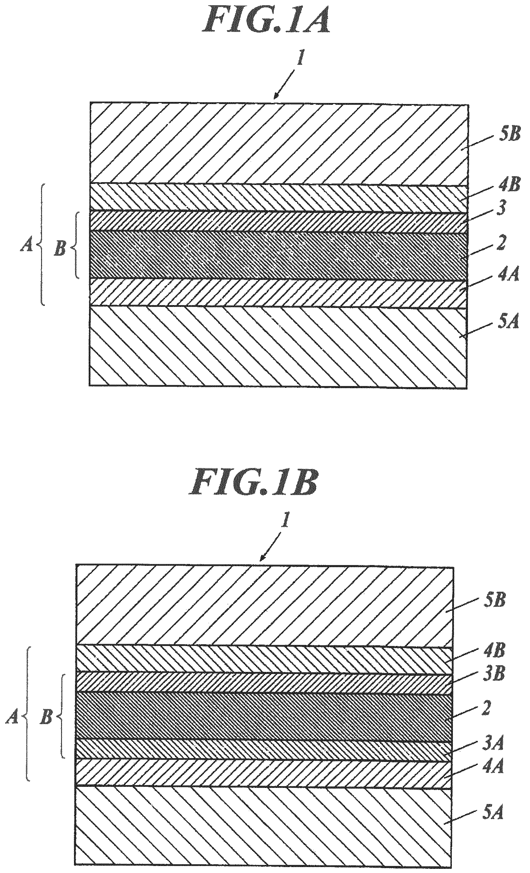

Furthermore, as exemplified in Fig. 1B described below, according to the constitution in which the heat ray shielding film unit A has the heat ray shielding film B having the heat ray shielding layer 3A and 3B, respectively, on both surfaces of the transparent resin film 2 and the adhesive layer 4A and 4B on each heat ray shielding layer of the heat ray shielding film B, an excellent heat ray shielding effect is obtained and the adhesion property between the heat ray shielding film unit A and a glass substrate is further improved, and thus it is preferable from the viewpoint of further lowering the rate of glass scattering caused by an external impact.

The heat ray shielding laminated glass of the present invention is characterized in that the average moisture content of the heat ray shielding film unit A is 1.0% by mass or less. Specifically, it can be realized by the manufacturing method described below.

Namely, it is to apply a method for manufacturing a heat ray shielding laminated glass, the method including a step of producing a heat ray shielding film by forming at least one layer of a heat ray shielding layer on a transparent resin film, a step of producing the heat ray shielding film unit A by forming an adhesive layer on at least one surface of the heat ray shielding film, a step of pseudo-press bonding by disposing a glass substrate on both surfaces of the heat ray shielding film unit A, and a step of main press bonding by performing a heat and pressure treatment of members which have been subjected to pseudo-press bonding to produce a heat ray shielding laminated glass, characterized in that a step for preliminary heating the heat ray shielding film or the heat ray shielding film unit A is included and the preliminary heating step is a step in which the heat ray shielding film or the heat ray shielding film unit A is heated and the average moisture content of the heat ray shielding film unit A, which is obtained by TG-DTA after forming the heat ray shielding laminated glass, is 1.0% by mass or less.

Furthermore, regarding the method for manufacturing a heat ray shielding laminated glass, it is preferable that the manufacturing is performed such that the average moisture content of the heat ray shielding film unit A, which is obtained by TG-DTA before press bonding with a glass substrate, is preferably 1.0% by mass or less, from the viewpoint of having more enhanced adhesion property so as to lower the rate of glass scattering caused by an external impact.

Furthermore, regarding the method for manufacturing a heat ray shielding laminated glass, it is preferable that the manufacturing is performed such that the average moisture content of the heat ray shielding film constituting the heat ray shielding film unit A, which is obtained by TG-DTA before press bonding with a glass substrates, is preferably 1.0% by mass or less, from the viewpoint of having more enhanced adhesion property so as to lower the rate of glass scattering caused by an external impact.

Furthermore, regarding the method for manufacturing a heat ray shielding laminated glass, it is preferable that the manufacturing is performed such that the average moisture content of the heat ray shielding film unit A, which is obtained by TG-DTA, is preferably 0.5% by mass or less, from the viewpoint of having more enhanced adhesion property so as to lower the rate of glass scattering caused by an external impact.

Furthermore, from the viewpoint of having excellent flatness of a heat ray shielding film or heat ray shielding film unit A to be formed, a preferred embodiment is that the preliminary heating temperature for the heat ray shielding film or the heat ray shielding film unit A during the preliminary heating step is in the temperature range of (Tg - 30°C) to (Tg + 10°C) when the glass transition temperature of a transparent resin film constituting the heat ray shielding film is Tg.

Hereinbelow, the present invention, the components of the invention, and modes and aspects for carrying out the invention will be described in detail. Meanwhile, the "to" described in the following explanations is used to include the numerical values described before and after it as a lower limit value and an upper limit value, respectively.

<<1: Constitution of heat ray shielding laminated glass>>

First, basic constitutions of the heat ray shielding laminated glass of the present invention (hereinbelow, also simply referred to as a laminated glass) are described in view of drawings.

Figs. 1A and 1B are schematic cross-sectional views illustrating an exemplary constitution of the heat ray shielding laminated glass of the present invention.

In Fig. 1A, the heat ray shielding laminated glass 1 consists of the heat ray shielding film unit A and a pair of the glass substrate 5A and 5B for sandwiching it. Furthermore, the heat ray shielding film unit A has the heat ray shielding layer 3 having a constitution in which a high refractive index layer and a low refractive index layer are laminated, for example, on the transparent resin film 2, and also has the adhesive layer 4A and 4B on both surfaces of the heat ray shielding layer 3, and the heat ray shielding film unit A is adhered with the glass substrate 5A and 5B.

In Fig. 1B, the heat ray shielding film unit A is shown to have the heat ray shielding layer 3A and 3B, respectively, on both surfaces of the transparent resin film 2, and also the adhesive layer 4A and 4B on each heat ray shielding layer, and the heat ray shielding film unit A is adhered with the glass substrate 5A and 5B.

In the present invention, the heat ray shielding laminated glass 1 consisting of the heat ray shielding film unit A and a pair of the entire glass substrate 5A and 5B for sandwiching it is characterized in that the average moisture content of the heat ray shielding film unit A after press bonding with the glass substrate 5 is 1.0% by mass or less, and preferably 0.5% by mass or less as measured by TG-DTA (simultaneous measurement of thermogravimetry differential thermal analysis).

Furthermore, regarding the heat ray shielding laminated glass of the present invention, it is preferable that the average moisture content of the heat ray shielding film unit A, which is obtained by TG-DTA before press bonding the heat ray shielding film unit with a pair of a glass substrate, is preferably 1.0% by mass or less.

Furthermore, regarding the heat ray shielding laminated glass of the present invention, it is preferable that the average moisture content of the heat ray shielding film (B) alone for constituting the heat ray shielding film unit A, which is obtained by TG-DTA before press bonding the heat ray shielding film unit with a pair of a glass substrate, is preferably, 1.0% by mass or less.

In the present invention, as average moisture content, the value measured by TG-DTA (simultaneous measurement of thermogravimetry differential thermal analysis) is used.

TG-DTA represents a (simultaneous measurement of thermogravimetry · differential thermal analysis, and it is a method for simultaneous measurement of thermogravimetry and differential thermal analysis in combination by using a single apparatus. Accordingly, based on a mass change caused by dehydration, obtainment of moisture content can be achieved.

Specifically, balance beams for each of a specimen (sample) and a reference material (reference) are symmetrically arranged in a heater, mass is measured by using a driving coil of which sensitivity is adjusted independently from the sample and reference, and the difference is obtained as a TG signal.

By performing the mass measurement in a differential manner, influences of beam expansion and influences of air convection and buoyancy can be cancelled so that the thermogravimetric measurement can be performed with high sensitivity.

Because the mass is measured using a driving coil independently from a sample and a reference, drift of a TG baseline (movement of a base line according to temperature change) can be also adjusted in an electrically simple manner. Furthermore, as a thermocouple is installed right below the each holder for sample and reference, not only the sample temperature is measured but also the DTA signal is simultaneously obtained.

By TG (thermogravimetry), a change in mass according to dehydration of a sample is analyzed.

Examples of a specific measurement apparatus include EXSTAR6000 TG/DTA that is manufactured by Hitachi High-Technologies Corporation. In the present invention, this apparatus is also used for measuring the moisture content. For the measurement, the moisture content was measured for 10 samples, and the average value thereof is obtained and used as the average moisture content mentioned in the present invention.

In the present invention, the heat ray shielding laminated glass is constituted by press bonding of a pair of glass substrates on both surface of the heat ray shielding film unit A, which consists of the heat ray shielding film B having a heat ray shielding layer on a transparent resin film and the adhesive layer, which is characterized in that the average moisture content in the heat ray shielding film unit A after press bonding is 1.0% by mass or less. Specifically, the average moisture content of the shielding film unit A in the heat ray shielding laminated glass can be determined by a measurement according to the following method.

In general, as a method of extracting the heat ray shielding film unit A as a constitutional element from a heat ray shielding laminated glass, various methods like a method in which a produced heat ray shielding laminated glass is nipped between press bonding rollers or the like for transport to break the glass substrate and detaching it according to immersion in water or a solution added with water or chemical can be considered, for example. However, in the present invention, it is essential to apply a method which does not allow any change in the moisture content of the shielding film unit A which has been detached · separated, and thus a dry separation method for separating crushed glass substrate which utilizes tension of the film shielding unit A is employed.

Specifically, the produced heat ray shielding laminated glass is crushed by placing a pair of a crusher roller before and after the heat ray shielding laminated glass, that is, two pairs of crusher roller, and tension is applied to the film shielding unit A transported based on an operational force and a difference in a circumference speed between the front and back rollers while simultaneously crushing the heat ray shielding laminated glass between the rollers, and the adhered glass substrate fragments are detached from the film shielding unit A. By measuring the moisture content of the film shielding unit A, which has been separated as above, according to the aforementioned method, the moisture content of the film shielding unit A constituting the heat ray shielding laminated glass can be obtained. Meanwhile, the measurement operations are performed in an environment of 25°C, 55%RH.

On the laminated glass exemplified above Fig. 1A and Fig. 1B, an infrared absorbing layer, a heat insulating laser, or a hard coat layer may be additionally formed, if necessary.

The glass substrate for constituting the laminated glass of the present invention may be a laminated glass with flat plate shape or a laminated glass with curved shape which is used for a front window of an automobile. When the laminated glass of the present invention is used for a window glass of an automobile, in particular, it preferably has visible light transmittance of 70% or more. Meanwhile, the visible light transmittance described herein can be measured in accordance with JIS R3106 (1998) "Testing method on transmittance, reflectance and solar heat gain coefficient of flat glasses" by using a spectrophotometer (type U-4000, manufactured by Hitachi, Ltd.), for example.

<<2: Method for manufacturing heat ray shielding laminated glass>>

The method for manufacturing a heat ray shielding laminated glass according to the present invention includes a step of producing the heat ray shielding film B by forming at least one layer of a heat ray shielding layer on a transparent resin film, a step of producing the heat ray shielding film unit A by forming an adhesive layer on at least one surface of the heat ray shielding film, a step of pseudo-press bonding by disposing a glass substrate on both surface of the heat ray shielding film unit A, and a step of main press bonding by performing a heat and pressure treatment of members which have been subjected to pseudo-press bonding to produce a heat ray shielding laminated glass, the method being characterized in that a step for preliminary heating the heat ray shielding film or the heat ray shielding film unit A is included and the preliminary heating step is a step in which the heat ray shielding film or the heat ray shielding film unit A is heated and the average moisture content of the heat ray shielding film unit A, which is obtained by TG-DTA after forming the heat ray shielding laminated glass, is 1.0% by mass or less.

More specifically, the method for manufacturing a heat ray shielding laminated glass according to the present invention can be achieved by the following two manufacturing methods.

The first method is characterized in that manufacturing is achieved by performing steps of carrying out preliminary heating of a heat ray shielding film, in which at least one heat ray shielding layer is formed on a formed transparent resin film, to heat the heat ray shielding film and performing preliminary heating at conditions such that the average moisture content of the heat ray shielding film unit A, which is obtained by TG-DTA after forming the heat ray shielding laminated glass, is 1.0% by mass or less.

Namely, it is a method for manufacturing a heat ray shielding laminated glass having a step of producing a heat ray shielding film by forming at least one layer of a heat ray shielding layer on a transparent resin film, a step of preliminarily heating the heat ray shielding film, a step of producing the heat ray shielding film unit A by forming an adhesive layer on at least one surface of the heat ray shielding film, a step of pseudo-press bonding by disposing a glass substrate on both surfaces of the heat ray shielding film unit A, and a step of main press bonding by performing a heat and pressure treatment of members which have been subjected to pseudo-press bonding to produce a heat ray shielding laminated glass, in which the step of preliminarily heating the heat ray shielding film is a step in which the heat ray shielding film is heated such that the average moisture content of the heat ray shielding film unit A, which is obtained by TG-DTA after forming the heat ray shielding laminated glass, is 1.0% by mass or less.

As a more specific method, the temperature for preliminary heating of the heat ray shielding film for the preliminary heating step of the first method is in the temperature range of (Tg - 30°C) to (Tg + 10°C) relative to Tg of a transparent resin film constituting the heat ray shielding film.

The second method is characterized in that, the heat ray shielding film unit A composed of a heat ray shielding film and at least one adhesive layer is subjected to a preliminary heating step such that the average moisture content, which is obtained by TG-DTA after heating the heat ray shielding film, is 1.0% by mass or less.

Namely, it is a method for manufacturing a heat ray shielding laminated glass characterized by having a step of producing the heat ray shielding film unit A composed of a heat ray shielding film having at least one heat ray shielding layer on a transparent resin film and at least one adhesive layer, a step of performing preliminary heating the produced heat ray shielding film unit A, a step of pseudo-press bonding by disposing a glass substrate on both surfaces of the heat ray shielding film unit A which has been preliminarily heated, and a step of main press bonding by performing a heat and pressure treatment of members which have been subjected to pseudo-press bonding to produce a heat ray shielding laminated glass, the method being characterized in that the step of preliminarily heating the heat ray shielding film unit A is a step in which the heat ray shielding film unit A is heated such that the average moisture content, which is obtained by TG-DTA, is 1.0% by mass or less.

As a more specific method, the temperature for preliminary heating of the heat ray shielding film unit A for the preliminary heating step of the second method is in the temperature range of (Tg - 30°C) to (Tg + 10°C) when the glass transition temperature of a transparent resin film constituting the heat ray shielding film is Tg.

[Process flow for manufacturing heat ray shielding laminated glass]

With regard to each method for manufacturing a heat ray shielding laminated glass described above, explanations are given with reference to drawings.

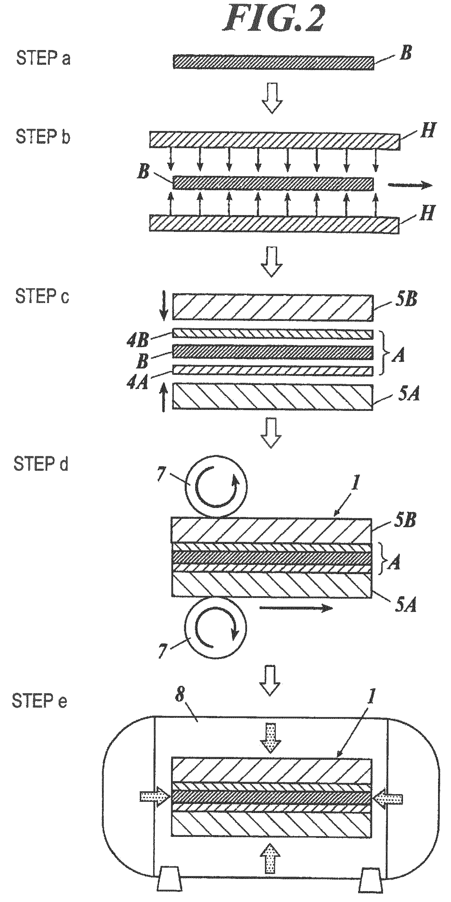

Fig. 2 is a drawing illustrating an exemplary process flow of the method for manufacturing a heat ray shielding laminated glass of the present invention (first method), in which preliminary heating is performed for the heat ray shielding film B that is produced by laminating the heat ray shielding layer 3 on the transparent resin film 2.

The heat ray shielding laminated glass 1 of the present invention can be manufactured by the Step a to Step e illustrated in Fig. 2.

Step a: As illustrated in Fig. 1A, the heat ray shielding layer 3B is formed on the transparent resin film 2 to produce the heat ray shielding film B.

Step b: By using the heating means H or the like, preliminary heating is performed for the produced heat ray shielding film B in the temperature range of (Tg - 30°C) to (Tg + 10°C) when the glass transition temperature of the transparent resin film 2 constituting the heat ray shielding film is Tg, in which the preferred mode is that the average moisture content of the heat ray shielding film B is adjusted to 1.0% by mass or less.

Step c: The adhesive layer 4A and 4B are disposed on both surfaces of the heat ray shielding film B obtained after preliminary heating to obtain the heat ray shielding film unit A, and the glass substrate 5A and 5B are additionally disposed and attached on both surfaces of the unit A to form a laminate of a laminated glass (hereinbelow, also referred to as a laminated glass unit).

Step d: A pseudo-press bonding treatment is performed for the above-produced laminated glass unit by using the press roller 7 or the like to manufacture the laminated glass 1.

Step e: The laminated glass 1 obtained after a pseudo-press bonding treatment is transferred to the autoclave 8 and applied with constant temperature and pressure to perform main press bonding, thereby manufacturing the laminated glass 1 as a final product.

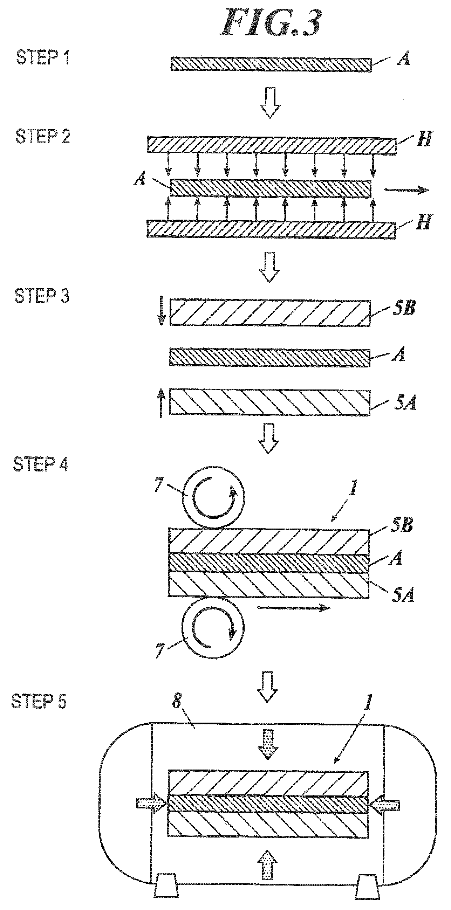

Fig. 3 is a drawing illustrating an exemplary process flow of the method for manufacturing a heat ray shielding laminated glass of the present invention (second method), in which preliminary heating is performed for the heat ray shielding film unit A which consists of a heat ray shielding film and an adhesive layer.

The heat ray shielding laminated glass 1 of the present invention can be manufactured via the following Step 1 to Step 5 illustrated in Fig. 3.

Step 1: After producing the heat ray shielding film B by forming a heat ray shielding layer on a transparent resin film, an adhesive layer is formed by coating on both surfaces of the heat ray shielding film B to produce the heat ray shielding film unit A.

Step 2: By using the heating means H or the like, preliminary heating is performed for the produced the heat ray shielding film unit A in the temperature range of (Tg - 30°C) to (Tg + 10°C) relative to the glass transition temperature Tg of the transparent resin film constituting the heat ray shielding film B such that the average moisture content of the heat ray shielding film unit A after producing the heat ray shielding laminated glass is 1.0% by mass or less.

Step 3: The glass substrate 5A and 5B are disposed and attached on both surfaces of the heat ray shielding film unit A which is obtained after preliminary heating to form a laminated glass unit.

Step 4: A pseudo-press bonding treatment is performed for the produced laminated glass unit by nipping using the press roller 7 or the like to manufacture the laminated glass 1.

Step 5: The laminated glass 1 obtained after a pseudo-press bonding treatment is transferred to the autoclave 8 and applied with constant temperature and pressure to perform main press bonding, thereby manufacturing the laminated glass 1 as a final product.

In the present invention, as a means for having the average moisture content of the heat ray shielding film B or the heat ray shielding film unit A at 1.0% by mass or less, it is more preferable to suitably control, in addition to the method for performing the preliminary heating treatment which has been described in relation to Fig. 2 and Fig. 3, the drying conditions during production of the heat ray shielding film unit, storage environment for each constitutional member until attachment of the heat ray shielding film unit to a glass substrate, and environmental conditions like temperature and humidity during the step for attaching the heat ray shielding film unit to a glass substrate.

[Conditions for manufacturing laminated glass]

With regard to the method for manufacturing a heat ray shielding laminated glass of the present invention, the manufacture can be achieved according to the process flow illustrated in Fig. 2 or Fig. 3, and detailed manufacturing conditions for each step (for example, heating temperature condition, pressure condition) are described below.

With regard to the Step b illustrated in Fig. 2 or the Step 2 illustrated in Fig. 3, by the heating means H or the like, heating is performed for the heat ray shielding film B or the heat ray shielding film unit A in the temperature range of (Tg - 30°C) to (Tg + 10°C) relative to the glass transition temperature Tg of the transparent resin film constituting the heat ray shielding film, and the preliminary heating is performed at conditions such that the average moisture content of the heat ray shielding film unit A after producing the heat ray shielding laminated glass is 1.0% by mass or less.

The heating means H is not particularly limited, and examples thereof include a heating fan, a flat heater, a heating roller, a heating belt, and a radiant heating means like a halogen heater or a far infrared heater. It can be suitably selected or applied in combination.

For a case in which a heating fan is used as a heating means, a heat generating means, for example, an electric heating wire, a heater, or the like, is installed inside the heating fan and, by introducing air, hot air is sprayed onto a recoding medium so that the recording medium is heated to a pre-determined temperature.

When a flat heater is used as a heating means, a nichrome wire heating element is internally installed, inside the flat heater, in flat form as a heating member of which surface is coated with an aluminum plate or the like and prepared to have a curved shape by taking advantage of an aluminum plate so as to improve a contact state with a recording medium.

If a radiant heating means is used as a heating means, as a heat source, a halogen lamp or a far infrared heater can be used, for example.

Furthermore, when a heating roller is used as a heating means, a heating roller which has a constitution that a heating means is enclosed within a hollow mandrel can be used as a heating roller. The mandrel with a pipe shape is mainly composed of metal, and examples of the metal for a mandrel include metal like iron, aluminum, and copper, and an alloy thereof.

The heating temperature for the preliminary heating step is, although not particularly limited, preferably in the temperature range of (Tg - 30°C) to (Tg + 10°C) relative to Tg a transparent resin film constituting the heat ray shieling film.

The heating time for the preliminary heating step is set, within the aforementioned temperature range, at the conditions such that the average moisture content of the heat ray shielding film or the heat ray shielding film unit A is 1.0% by mass or less. Considering the productivity, it is in a range of 10 to 60 minutes, and the setting temperature is preferably adjusted in the above temperature range such that the time can fall within the aforementioned time range.

By performing preliminary heating at the above temperature conditions so that the average moisture content of the heat ray shielding film B or the heat ray shielding film unit A is 1.0% by mass or less, when the heat ray shielding film unit A is sandwiched by the glass substrate 5A and 5B to manufacture the laminated glass 1, foaming caused by moisture on an interface between the glass substrate 5A and the adhesive layer 4A or between the glass substrate 5B and the adhesive layer 4B can be presented. Thus, as an excellent adhesion property is obtained, it is possible to obtain a laminated glass having reduced glass scattering rate when the glass substrate is damaged by an external impact.

Subsequently, with regard to the heat ray shielding film unit A having a preliminarily-heated heat ray shielding film, a glass substrate is disposed on both surfaces of the heat ray shielding film unit A followed by pseudo-press bonding.

As for the pseudo-press bonding step, there can be a method in which the heat ray shielding film unit A is placed between two pieces of a glass substrate as shown in the Step d of Fig. 2 or the Step 4 of Fig. 3, and the laminate is passed through the press roller 7 (nip roller) and applied with pressure of 200 to 1000 kPa, for example, to perform preliminary press bonding while removing the air contained in each member. At that time, from the viewpoint of improving the adhesion property, it is preferable to perform heating at temperature range of 40 to 100°C. However, the heating treatment which is performed herein is clearly distinguished from the preliminary heating step of the present invention.

Furthermore, as other preferred example of the pseudo-press bonding method, the laminate is added to a rubber bag, which is then deaerated by connecting to an air discharge system, and it is treated under vacuum atmosphere of 100 kPa or less, for example, in the temperature range of 90 to 150°C, and preferably, in the temperature range of 20 to 60°C.

After performing the pseudo-press bonding according to the method described above, the main press bonding treatment is performed.

The main press bonding step described in the Step e of Fig. 2 or the Step 5 of Fig. 3 is a step for producing a laminated glass by surely adhering a laminate obtained after pseudo-press bonding, and it can be performed by heat pressing the laminate obtained after pseudo-press bonding. As shown in the Step e of Fig. 2 or the Step 5 of Fig. 3, the heat pressing of the main press bonding step is preferably performed, after adding the laminate from pseudo-press bonding to the autoclave 8, in the pressure range of 1.0 to 1.6 MPa and in temperature range of 100 to 200°C, and more preferably in temperature range of 120 to 150°C for 30 to 90 minutes, although the heating temperature cannot be uniformly set as it may vary depending on characteristics of a material for application, for example, Tg of a transparent resin film constituting the heat ray shielding film, or the like.

«3: Heat ray shielding film»

The heat ray shielding film according to the present invention has a constitution that at least one heat ray shielding layer is present on a transparent resin film. More preferably, the heat ray shielding layer is present on both surfaces of a transparent resin film as illustrated in b) of Fig. 1.

It is sufficient for the heat ray shielding film according to the present invention to have a transparent resin film and a heat ray shielding layer. If necessary, other constitutional layers like an infrared absorbing layer, a heat insulating layer, and a hard coat layer can be suitably formed.

The overall thickness of the heat ray shielding film according to the present invention is preferably in the range of 30 to 200 $\mu$m, more preferably in the range of 40 to 100 $\mu$m, and even more preferably in the range of 45 to 75 $\mu$m.

As optical properties of the heat ray shielding film according to the present invention, the transmittance in a visible light range, which is measured in accordance with JIS R3106 (1998), is preferably 60% or more, more preferably 70% or more, and even more preferably 80% or more. In addition, in the wavelength range of 900 nm to 1400 nm, it preferably has a region with reflectivity of more than 50%.

Transparent resin film

The transparent resin film according to the present invention plays a role of a support for the heat ray shielding film.

Thickness of the transparent resin film according to the present invention is preferably in the range of 30 to 200 $\mu$m, more preferably in the range of 30 to 70 $\mu$m, and even more preferably in the range of 35 to 70 $\mu$m. When the thickness is 30 $\mu$m or more, wrinkles are not likely to occur during handling. When the thickness is 200 $\mu$m or less, the follow-up capability to a curved glass surface is improved at the time of bonding with a glass, and thus wrinkles are not likely to occur.

The transparent resin film according to the present invention is preferably a biaxially oriented polyester film. However, as long as the obtained film remains within the scope of the present invention, a non-stretched polyester film or a stretched polyester film can be used for at least one side. From the viewpoint of improving the strength and suppressing thermal expansion, a stretched film is preferable. When used for a front window of an automobile, in particular, a stretched film is more preferable.

From the viewpoint of preventing an occurrence of wrinkles in the heat ray shielding film during manufacture of a laminated glass or cracks in a reflective layer, the transparent resin film according to the present invention preferably has thermal shrinkage rate in the range of 0.1 to 3% at temperature of 150°C. It is more preferably in the range of 1.5 to 3%, and even more preferably in the range of 1.9 to 2.7%.

Meanwhile, measurement of the thermal shrinkage rate can be performed as described below.

In the flow direction (MD) and width direction (TD) of a film, tension of 10 N is applied per 1 m width of a transparent resin film at 150°C, and the average value of MD and TD elongation rate of the film is obtained as thermal shrinkage rate.

As for the transparent resin film which is applied to the laminated glass of the present invention, it is not particularly limited as long as it has transparency, and various resin films can be used. Examples thereof which can be used include a polyolefin film (for example, polyethylene, or polypropylene), a polyester film (for example, polyethylene terephthalate, or polyethylene naphthalate), polyvinyl chloride, or cellulose triacetate, and the polyester film is preferred. The polyester film (hereinbelow, referred to as polyester) is not to be considered particularly limited, but preferably polyester which contains a dicarboxylic acid component and a diol component as main constituents, and has a film forming property. Examples of the dicarboxylic acid component as the main constituent include terephthalic acid, isophthalic acid, phthalic acid, 2,6-naphthalene dicarboxylic acid, 2,7-naphthalene dicarboxylic acid, diphenylsulfone dicarboxylic acid, diphenyl ether dicarboxylic acid, diphenylethane dicarboxylic acid, cyclohexane dicarboxylic acid, diphenyl dicarboxylic acid, diphenyl thioether dicarboxylic acid, diphenyl ketone dicarboxylic acid, and phenylindane dicarboxylic acid. In addition, examples of the diol component include ethylene glycol, propylene glycol, tetramethylene glycol, cyclohexane dimethanol, 2,2-bis (4-hydroxyphenyl)propane, 2,2-bis, (4-hydroxyethoxyphenyl)propane, bis(4-hydroxyphenyl)sulfone, bisphenol fluorenedihydroxyethyl ether, diethylene glycol, neopentyl glycol, hydroquinone and cyclohexane diol. Among polyesters containing these components as main constituents, polyesters containing, as the main constituents, terephthalic acid or 2,6-naphtalene dicarboxylic acid as the dicarboxylic acid component and ethylene glycol or 1,4-cyclohexanedimethanol as the diol component are preferred in terms of transparency, mechanical strength, dimensional stability, or the like. Among them, preferred are polyesters containing polyethylene terephthalate or polyethylene naphthalate as a main constituent, copolymerized polyesters composed of a terephthalic acid, 2,6-naphthalene dicarboxylic acid, and ethylene glycol, and polyesters containing, as a main constituent, a mixture of two or more of the polyesters.

The transparent resin film according to the present invention may contain various fine particles for the purpose of facilitating handling, provided that transparency is not impaired. Examples of the fine particles used in the present invention include inorganic particles of calcium carbonate, calcium phosphate, silica, kaolin, talc, titanium dioxide, alumina, barium sulfate, calcium fluoride, lithium fluoride, zeolite, molybdenum sulfide, and the like; crosslinked polymer particles; and organic particles of calcium oxalate and the like. Furthermore, examples of the method of adding fine particles include a method of adding fine particles by incorporating the fine particles into the polyester used as a raw material, and a method of directly adding fine particles to the extruder. Any one of these methods may be employed, or two methods may be used in combination. In the present invention, additives in addition to the fine particles may also be added as necessary. Examples of such additives include a stabilizer, a lubricating agent, a crosslinking agent, a blocking inhibitor, an oxidation inhibitor, a dye, a pigment, and an ultraviolet absorbing agent

The transparent resin film can be produced by a conventionally known general method. For example, a melt casting method in which an unstretched transparent resin film that is substantially amorphous and is not oriented, can be produced by melting a resin that serves as a material using an extruder, extruding the resin by an annular die or a T-die, and rapidly cooling the resin, or a solution casing method in which a resin that serves as a material is dissolved in an organic solvent or the like to prepare a dope, which is then cast on an endless metal belt to produce a transparent resin film, can be used.

Furthermore, a stretched transparent resin film can be produced by stretching an unstretched transparent resin film in the flow (longitudinal axis) direction of the transparent resin film, or in a direction perpendicular to the flow direction (horizontal axis) of the transparent resin film, by known methods such as monoaxial stretching, tenter type sequential biaxial stretching, tenter type simultaneous biaxial stretching, and tubular type simultaneous biaxial stretching. The stretch ratio in this case can be appropriately selected in accordance with the resin that serves as the raw material of the transparent resin film, but the stretch ratio is preferably 2 to 10 times for the longitudinal direction and the transverse direction, respectively.

Furthermore, the transparent resin film may be subjected to a relaxation treatment and an off-line heat treatment in view of dimensional stability. The relaxation treatment is preferably carried out by a process which includes, after thermal fixation of the polyester film during a film stretching and production process, up to the process in the tenter for transverse stretching, or to winding after passing through the tenter. The relaxation treatment is preferably carried out at a treatment temperature range of 80 to 200°C, and more preferably, the treatment temperature is in the range of 100 to 180°C.

Also, it is preferable that the relaxation treatment is carried out at a relaxation ratio in the range of 0.1 to 10%, and more preferably at a relaxation ratio of 2 to 6%, for both the longitudinal direction and the width direction. The transparent resin film that has been subjected to a relaxation treatment has enhanced heat resistance by being subjected to an off-line heat treatment as described below, and also has satisfactory dimensional stability.

In the transparent resin film, it is possible to apply a coating liquid for undercoating layer in an in-line mode on one surfaces or both surfaces of the film during the film forming step. According to the present invention, undercoating application during the film forming step is called in-line undercoating. Examples of the resin used in the coating liquid for undercoating layer that is useful for the present invention include a polyester resin, an acryl-modified polyester resin, a polyurethane resin, an acrylic resin, a vinyl resin, a vinylidene chloride resin, a polyethyleneimine vinylidene resin, a polyethyleneimine resin, a polyvinyl alcohol resin, a modified polyvinyl alcohol resin, and gelatin, and all of these can be preferably used. In this undercoating layer, conventionally known additives may be added. The undercoating layer can be applied by known methods such as roll coating, gravure coating, knife coating, dip coating, and spray coating. The amount of coating of the undercoating layer is preferably about 0.01 to 2 $g/m^2$ (dry state).

Heat ray shielding layer

The heat ray shielding layer according to the present invention exhibits a function of shielding sun light, in particular, infrared ray components. The heat ray shielding layer preferably consists of a reflective layer which contains a resin. It is preferably an infrared reflective layer which contains a water soluble binder resin as a resin component. More preferably, it is an infrared reflective layer which contains a water soluble binder resin and metal oxide particles. The infrared reflective layer described in the present invention indicates a layer which has a capability of reflecting infrared ray.

As for the heat ray shielding layer according to the present invention, it is preferably a laminate which is formed by alternately laminating the high refractive index layer which contains a water soluble binder resin and metal oxide particles and the low refractive index layer which contains a water soluble binder resin and metal oxide particles on the transparent resin film.

The thickness per layer of the high refractive index layer is preferably in the range of 20 to 800 nm, and more preferably 50 to 350 nm. Also, the thickness per layer of the low refractive index layer is preferably in the range of 20 to 800 nm, and more preferably 50 to 350 nm.

Herein, when the thickness per layer is measured, the high refractive index layer and the low refractive index layer may have a conspicuous interface between these layers, or there may be a gradual change in composition between the layers. In a case in which the interface undergoes a gradual change in composition, a point defined by (smallest refractive index between the two layers + $\Delta n/2$), provided that (largest refractive index - smallest refractive index = $\Delta n$), within a region in which the respective layers are mixed and the refractive index continuously changes, is regarded as the layer interface. The same also applies to the layer thickness of the low refractive index layer that will be described below.

The metal oxide concentration profile of the heat ray shielding layer of the present invention that is formed by alternately laminating a high refractive index layer and a low refractive index layer can be observed by performing etching from the surface in the depth direction using a sputtering method, conducting sputtering at a rate of 0.5 nm/min using an XPS surf ace analyzer by defining the top surface as 0 nm, and analyzing the atomic composition ratio. Furthermore, it is also possible to cut a laminate film and analyze the atomic composition ratio of the cut surface with an XPS surface analyzer. When the concentration of metal oxide changes non-continuously in a mixed region, the boundary can be confirmed by a tomogram obtained by electron microscopy (TEM).

The XPS surface analyzer is not particularly limited, and any model can be used; however, for example, ESCALAB-200R manufactured by VG Scientific, Ltd. can be used. An analysis is carried out at an output power of 600 W (accelerating voltage: 15 kV, emission current: 40 mA) using Mg for the X-ray anode.

With regard to the heat ray shielding layer according to the present invention, a preferred range of the total number of layers of the high refractive index layer and the low refractive index layer is in the range of 6 to 50 layers from the viewpoint of productivity. It is more preferably in the range of 8 to 40 layers, and still more preferably in the range of 9 to 30 layers.

With regard to the heat ray shielding layer, it is preferable to design the difference in the refractive index between the high refractive index layer and the low refractive index layer to be large, from the viewpoint that the infrared reflectance can be made higher with a smaller number of layers. In the present invention, the difference in the refractive index between a high refractive index layer and a low refractive index layer that are adjacent to each other is preferably 0.1 or more, more preferably 0.3 or more, even more preferably 0.35 or more, and still more preferably 0.4 or more. However, regarding the uppermost layer and the lowermost layer, a configuration other than the suitable range described above may also be employed.

Also, the reflectance of a particular wavelength region is determined by the difference in the refractive index of two adjacent layers and the number of laminated layers, and as the difference in the refractive index is larger, an equal reflectance can be obtained with a smaller number of layers. This difference in the refractive index and the required number of layers can be calculated using commercially available optical design software programs. For example, in order to obtain a near-infrared reflectance of 90% or higher, if the difference of refractive index is smaller than 0.1, lamination of 200 or more layers is needed. Thus, not only productivity is lowered, but also scattering at the lamination interface is increased, and transparency is decreased. Also, it is very difficult to produce the laminated glass without defects. From the viewpoint of enhancing the reflectance and decreasing the number of layers, there is no upper limit in the difference of refractive index, but the limit is substantially about 1.4.

With regard to the heat ray shielding layer according to the present invention, a layer configuration in which the lowermost layer that is adjacent to the transparent resin film is a low refractive index layer is preferred from the viewpoint of the adhesiveness to the transparent resin film.

Furthermore, according to the present invention, the water soluble binder resins that is contained in the high refractive index layer or the low refractive index layer is preferably polyvinyl alcohols. Also, it is preferable that the degree of saponification of the polyvinyl alcohol contained in the high refractive index layer is different from the degree of saponification of the polyvinyl alcohol contained in the low refractive index layer. Furthermore, the first metal oxide particle contained in the high refractive index layer is preferably titanium oxide particles that have been surfaces treated with a silicon-containing hydrated oxide.

[3.2.1: High refractive index layer]

The high refractive index layer according to the present invention contains the water soluble binder resin A and the metal oxide particle A, and may optionally further contain, if necessary, a curing agent, another binder resin, a surfactant, and various additives.

The refractive index of the high refractive index layer according to the present invention is preferably 1.80 to 2.50, and more preferably 1.90 to 2.20.

(Water soluble binder resin A)

The water soluble binder resin according to the present invention indicates that, when the water soluble binder resin is dissolved in water at a concentration of 0.5% by mass at the temperature at which the water soluble binder resin dissolves at maximum, the mass of insoluble materials that are separated by filtration when filtered through a G2 glass filter (maximum pore size: 40 to 50 $\mu$m) is 50% by mass or less of the added water soluble binder resin.

The weight average molecular weight of the water soluble binder resin A according to the present invention is preferably in the range of 1,000 to 200,000. The weight average molecular weight is more preferably in the range of 3,000 to 40,000.

The weight average molecular weight described in the present invention can be measured according to a known method, and the weight average molecular weight can be measured by, for example, static light scattering, gel permeation chromatography (GPC), or time-of-flight mass spectrometry (TOF-MASS). In the present invention, the weight average molecular weight is measured according to gel permeation chromatography, which is a generally known method.

The content of the water soluble binder resin A in the high refractive index layer A is preferably in the range of 5 to 50% by mass, and more preferably in the range of 10 to 40% by mass, relative to 100% by mass of the solid content of the high refractive index layer.

The water soluble binder resin A applied to the high refractive index layer is preferably a polyvinyl alcohol. Furthermore, the water soluble binder resin that is present in the low refractive index layer that will be described below is also preferably a polyvinyl alcohol. Therefore, in the following, the polyvinyl alcohols that are included in the high refractive index layer and the low refractive index layer will be described together.

<Polyvinyl alcohol>

According to the present invention, it is preferable that the high refractive index layer and the low refractive index layer have polyvinyl alcohols with different degrees of saponification. Herein, in order to distinguish between the polyvinyl alcohols, the polyvinyl alcohol as the water soluble binder resin which is used for the high refractive index layer is referred to as polyvinyl alcohol (A), and the polyvinyl alcohol as the water soluble binder resin which is used for the low refractive index layer is referred to as polyvinyl alcohol (B). Meanwhile, in a case in which each refractive index layer contains plural polyvinyl alcohols having different degrees of saponification or different degrees of polymerization, the polyvinyl alcohol of the largest content in each refractive index layer is referred to as polyvinyl alcohol (A) in the high refractive index layer, and as polyvinyl alcohol (B) in the low refractive index layer, respectively.

The "degree of saponification" as described in the present specification is the proportion of hydroxyl groups relative to the total number of acetyloxy groups (derived from vinyl acetate of in the raw material) and hydroxyl groups in a polyvinyl alcohol.

Furthermore, when the term "polyvinyl alcohol of the largest content in the refractive index layer" as used herein is mentioned, polyvinyl alcohols having a difference in the degree of saponification of 3% by mol or less are regarded as identical polyvinyl alcohols, and then the degree of polymerization is calculated. However, a low-polymerization-degree polyvinyl alcohol having a degree of polymerization of 1000 or less is considered as a different polyvinyl alcohol (even if there is a polyvinyl alcohol having a difference in the degree of saponification of 3% by mol or less, the two are not considered as identical polyvinyl alcohols). Specifically, when a polyvinyl alcohol having a degree of saponification of 90% by mol, a polyvinyl alcohol having a degree of saponification of 91% by mol, and a polyvinyl alcohol having a degree of saponification of 93% by mol are included in the same layer at contents of 10% by mass, 40% by mass, and 50% by mass, respectively, these three polyvinyl alcohols are considered as identical polyvinyl alcohols, and a mixture of these three polymers is designated as polyvinyl alcohol (A) or (B). Furthermore, regarding the "polyvinyl alcohols having a difference in the degree of saponification of 3% by mol or less", if attention is paid to any one polyvinyl alcohol and the difference in the degree of saponification relative to that polyvinyl alcohol is 3% by mol or less, for example, in the case of a layer containing polyvinyl alcohols having degrees of saponification of 90% by mol, 91% by mol, 92% by mol, and 94% by mol and attention is paid to the polyvinyl alcohol having a degree of saponification of 91% by mol, since the difference in the degree of saponification with any polyvinyl alcohol is 3% by mol or less, the polyvinyl alcohols are considered as identical polyvinyl alcohols.

When polyvinyl alcohols having a difference in the degree of saponification of 3% by mol or more are included in the same layer, these polymers are considered as a mixture of different polyvinyl alcohols, and the degrees of polymerization and the degrees of saponification of the respective polymers are calculated. For example, in a case in which PVA203: 5% by mass, PVA117 : 25% by mass, PVA217: 10% by mass, PVA220: 10% by mass, PVA224: 10% by mass, PVA235 : 20% by mass, and PVA245: 20% by mass are included, the PVA (polyvinyl alcohol) of the largest content is a mixture of PVA217 to PVA245 (since the difference in the degree of saponification of PVA217 to PVA245 is 3% by mol or less, they are identical polyvinyl alcohols), and this mixture is designated as polyvinyl alcohol (A) or (B). Thus, in the mixture of PVA217 to PVA245 (polyvinyl alcohol (A) or (B)), the degree of polymerization is (1700 × 0.1 + 2000 × 0.1 + 2400 × 0.1 + 3500 × 0.2 + 4500 × 0.7)/0.7 = 3200, and the degree of saponification is 88% by mol.

The difference of the absolute values of the degree of saponification between polyvinyl alcohol (A) and polyvinyl alcohol (B) is preferably 3% by mol or more, and more preferably 5% by mol or more. When the difference is in this range, it is preferable because the state of interlayer mixing between the high refractive index layer and the low refractive index layer is achieved at a preferable level. Furthermore, it is more preferable if the difference in the degree of saponification between polyvinyl alcohol (A) and polyvinyl alcohol (B) is larger; however, from the viewpoint of the solubility of polyvinyl alcohol in water, the difference of the degree of saponification is preferably 20% by mol or less.

Furthermore, the degrees of saponification of the polyvinyl alcohol (A) and the polyvinyl alcohol (B) are preferably 75% by mol or more from the viewpoint of solubility in water. Also, it is preferable that one of the polyvinyl alcohol (A) and the polyvinyl alcohol (B) has a degree of saponification of 90% by mol or more, and the other has a degree of saponification of 90% by mol or less, in order to bring the state of interlayer mixing between the high refractive index layer and the low refractive index layer to a preferred level. It is more preferable that one of the polyvinyl alcohol (A) and the polyvinyl alcohol (B) has a degree of saponification of 95% by mol or more, and the other has a degree of saponification of 90% by mol or less. Meanwhile, there are no particular limitations on the upper limit of the degree of saponification of the polyvinyl alcohol; however, the upper limit is usually less than 100% by mol, and is about 99.9% by mol or less.

Furthermore, regarding the degrees of polymerization of the two kinds of polyvinyl alcohols having different degrees of saponification, polyvinyl alcohols having degrees of polymerization of 1,000 or more are preferably used, and particularly, polyvinyl alcohols having degrees of polymerization of 1,500 to 5,000 are more preferred, while polyvinyl alcohols having degrees of polymerization of 2,000 to 5,000 are even more preferably used. It is because when the degree of polymerization of a polyvinyl alcohol is 1,000 or more, no cracking occurs in the coating film, and when the degree of polymerization is 5,000 or less, the coating liquid is stabilized. The phrase "the coating liquid is stabilized" as used in the present specification means that the coating liquid becomes stable over long period of time as there is a little change in the liquid physical property of a coating liquid (for example, viscosity). When the degree of polymerization of at least one of the polyvinyl alcohol (A) and the polyvinyl alcohol (B) is in the range of 2,000 to 5,000, it is preferable because cracks in the coating film are reduced, and the reflectance at particular wavelengths is improved. When the degrees of polymerization of both the polyvinyl alcohol (A) and the polyvinyl alcohol (B) are in the range of 2,000 to 5,000, it is preferable because the above-described effect can be exhibited more significantly.

The "degree P of polymerization" as used in the present specification refers to the viscosity average degree of polymerization, which is measured according to JIS K6726 (1994). The viscosity average degree of polymerization can be obtained by completely re-saponifying PVA, purifying the PVA, and then determining by the following formula (1) from the intrinsic viscosity [η] (dl/g) measured in water at 30°C.

$$\text{Formula (1)}$$

$$P = ([\eta] \times 10^3/8.29)^{(1/0.62)}$$

The polyvinyl alcohol (B) contained in the low refractive index layer preferably has a degree of saponification in the range of 75% by mol to 90% by mol, and a degree of polymerization in the range of 2,000 to 5,000. When such a polyvinyl alcohol is incorporated into the low refractive index layer, it is preferable from the viewpoint that interface mixing is further suppressed. This is considered to be because cracking in the coating film is reduced, and settability is enhanced.

For the polyvinyl alcohols (A) and (B) used in the present invention, synthetic products may be used, or commercially available products may also be used. Examples of commercially available products that may be used as polyvinyl alcohols (A) and (B) include, for example, PVA-102, PVA-103, PVA-105, PVA-110, PVA-117, PVA-120, PVA-124, PVA-203, PVA-205, PVA-210, PVA-217, PVA-220, PVA-224, and PVA-235 (all manufactured by Kuraray Co., Ltd.); JC-25, JC-33, JF-03, JF-04, JF-05, JP-03, JP-04, JP-05, and JP-45 (all manufactured by Japan Vam & Poval Co., Ltd.).

The water soluble binder resin according to the present invention may include a modified polyvinyl alcohol that has been partially modified, in addition to a conventional polyvinyl alcohol obtainable by hydrolyzing polyvinyl acetate, as long as the effects of the present invention are not impaired. When the water soluble binder resin includes such a modified polyvinyl alcohol, adhesiveness, water resistance, and flexibility of the film may be improved. Examples of such a modified polyvinyl alcohol include a cationically modified polyvinyl alcohol, an anionically modified polyvinyl alcohol, a nonionically modified polyvinyl alcohol, and a vinyl alcohol-based polymer.

An example of the cationically modified polyvinyl alcohol may be the polyvinyl alcohol described in JP 61-10483 A, which has primary to tertiary amino groups or quaternary ammonium groups in the main chain or side chains of the polyvinyl alcohol. This polyvinyl alcohol is obtained by saponifying a copolymer of an ethylenically unsaturated monomer having a cationic group and vinyl acetate.

Examples of the ethylenically unsaturated monomer having a cationic group include trimethyl-(2-acrylamide-2,2-dimethylethyl)ammonium chloride, trimethyl-(3-acrylamide-3,3-dimethylpropyl)ammonium chloride, N-vinylimidazole, N-vinyl-2-methylimidazole, N-(3-dimethylaminopropyl)methacrylamide, hydroxylethyltrimethyl ammonium chloride, trimethyl-(2-methacrylamidepropyl)ammonium chloride, and N-(1,1-dimethyl-3-dimethylaminopropyl)acrylamide. The proportion of a cationically modified group-containing monomer in the cationically modified polyvinyl alcohol is 0.1 to 10% by mol, and preferably 0.2 to 5% by mol, with respect to vinyl acetate.

Examples of the anionically modified polyvinyl alcohol include polyvinyl alcohols having anionic groups as described in JP 1-206088 A; copolymers of vinyl alcohol and a vinyl compound having water soluble groups, as described in JP 61-237681 A and JP 63-307979 A ; and modified polyvinyl alcohols having water soluble groups described in JP 7-285265 A.

Furthermore, examples of the nonionically modified polyvinyl alcohol include the polyvinyl alcohol derivatives obtained by adding polyalkylene oxide groups to a portion of vinyl alcohol, as described in JP 7-9758 A; block copolymers of a vinyl compound having a hydrophobic group and vinyl alcohol, as described in JP 8-25795 A; silanol-modified polyvinyl alcohols having silanol groups; and reactive group-modified polyvinyl alcohols having reactive groups such as an acetoacetyl group, a carbonyl group, and a carboxyl group.

Furthermore, examples of the vinyl alcohol-based polymer include EXCEVAL (registered trademark, manufactured by Kurary Co., Ltd.) and NICHIGO G-POLYMER (registered trademark, manufactured by Nippon Synthetic Chemical Industry Co., Ltd.).

For the modified polyvinyl alcohol, two or more kinds having different degrees of polymerization or different kinds of modification can be used in combination.

The content of the modified polyvinyl alcohol is not particularly limited, but is preferably in the range of 1 to 30% by mass relative to the total mass (solid content) of the various refractive index. When the content is in this range, the above-described effects are exhibited better

According to the present invention, it is preferable that two kinds of polyvinyl alcohols having different degrees of saponification are used respectively in different layers having different refractive indices.

For example, in a case in which a polyvinyl alcohol (A) having a low degree of saponification is used in the high refractive index layer, and a polyvinyl alcohol (B) having a high degree of saponification is used in the low refractive index layer, it is preferable that the polyvinyl alcohol (A) in the high refractive index layer is included in an amount in the range of from 40% by mass to 100% by mass, and more preferably from 60% by mass to 95% by mass, relative to the total mass of all the polyvinyl alcohols in the layer; and it is preferable that the polyvinyl alcohol (B) in the low refractive index layer is included in an amount in the range of from 40% by mass to 100% by mass, and more preferably from 60% by mass to 95% by mass, relative to the total mass of all the polyvinyl alcohols in the low refractive index layer.

Furthermore, when a polyvinyl alcohol (A) having a high degree of saponification is used in the high refractive index layer, and a polyvinyl alcohol (B) having a low degree of saponification is used in the low refractive index layer, it is preferable that the polyvinyl alcohol (A) in the high refractive index layer is included in an amount in the range of from 40% by mass to 100% by mass, and more preferably from 60% by mass to 95% by mass, relative to the total mass of all the polyvinyl alcohols in the layer; and it is preferable that the polyvinyl alcohol (B) in the low refractive index layer is included in an amount in the range of from 40% by mass to 100% by mass, and more preferably from 60 to 95 mass, relative to the total mass of all the polyvinyl alcohols in the low refractive index layer. When the content is 40% by mass or more, interlayer mixing is suppressed, and the effect that disruption of the interface is reduced is noticeably shown. Meanwhile, when the content is 100% by mass or less, stability of the coating liquid is enhanced.

With regard to the high refractive index layer according to the present invention, as the water soluble binder resin A other than polyvinyl alcohol, any binder resin can be used without any limitation as long as the high refractive index layer containing the metal oxide particle A can form a coating film. Also for the low refractive index layer that will be described below, as the water soluble binder resin B other than polyvinyl alcohol (B), any binder resin can be used without any limitation as long as the low refractive index layer containing the metal oxide particle B can form a coating film. However, when environmental problems or flexibility of the coating film is considered, a water soluble polymer (particularly, gelatin, a thickening polysaccharide, and a polymer having a reactive functional group) is preferred. Such a water soluble polymer may be used singly, or two or more kinds thereof may be used in mixture.

With regard to the high refractive index layer, the content of the other binder resin that is used in combination with the polyvinyl alcohol preferably used as the water soluble binder resin can be in the range of 5 to 50% by mass relative to 100% by mass of the solid content of the high refractive index layer.

According to the present invention, from the viewpoint of not needing to use an organic solvent and being preferable for environment preservation, the binder resin is preferably composed of a water soluble polymer. That is, in the present invention, as long as the effects of the invention are not impaired, a water soluble polymer other than a polyvinyl alcohol and a modified polyvinyl alcohol may also be used as the binder resin, in addition to the polyvinyl alcohol and the modified polyvinyl alcohol described above. The term water soluble polymer implies that when the water soluble polymer is dissolved in water at a concentration of 0.5% by mass at the temperature at which the water soluble polymer dissolves at maximum, the mass of insoluble materials that are separated by filtration when filtered through a G2 glass filter (maximum pore size: 40 to 50 $\mu$m) is 50% by mass or less of the added water soluble polymer. Among such water soluble polymers, particularly gelatin, celluloses, thickening polysaccharides, or polymers having reactive functional groups are preferred. These water soluble polymers may be used singly, or two or more kinds thereof may be used in mixture.

Hereinbelow, these water soluble polymers which can be used in combination are described.

<Gelatin>

Regarding the gelatin that can be applied to the present invention, various gelatins that have been widely used in the field of silver halide photographic sensitized materials can be applied. For example, in addition to acid-treated gelatin and alkali-treated gelatin, enzymatically treated gelatin that is enzymatically treated in the production process for gelatin, and gelatin derivatives, that is, gelatin derivatives having amino groups, imino groups, hydroxyl groups, and carboxyl groups as functional groups in the molecule, which have been modified by treating with reagents having groups that are obtainable by reacting with the functional groups, may be used. General production methods for gelatin are well known, and for example, reference can be made to the descriptions in T. T. H. James: The Theory of Photographic Process 4th. ed.1977 (Macmillan) page 55; Kagaku Shashin Benran (Handbook of Scientific Photographs) (1st), pp. 72-75 (Maruzen Company, Limited); Shashin Kogaku no Kiso - Gin En Shashin-hen (Fundamentals of Photographic Engineering - Silver Salt photography), pp. 119-124 (CORONA PUBLISHING CO., LTD.), and the like. Furthermore, the gelatin described in Research Disclosure, Vol. 176, No. 17643 (December, 1978), Section IX may be considered.

<Film hardening agent for gelatin>

When gelatin is used, a film hardening agent for gelatin can be added as necessary.

Regarding the film hardening agent that can be used, any known compound that is conventionally used as a film hardening agent for photographic emulsion layer can be used, and examples thereof include organic film hardening agents such as a vinylsulfone compound, a urea-formalin condensate, a melanin-formalin condensate, an epoxy-based compound, an aziridine-based compound, an active olefin, and an isocyanate -based compound; and inorganic salts of polyvalent metals such as chromium, aluminum, and zirconium.

<Celluloses>

Regarding the celluloses that can be used in the present invention, water soluble cellulose derivatives can be preferably used, and examples thereof include water soluble cellulose derivatives such as carboxymethyl cellulose (cellulose carboxymethyl ether), methyl cellulose, hydroxymethyl cellulose, hydroxyethyl cellulose, and hydroxypropyl cellulose; and carboxymethyl cellulose (cellulose carboxymethyl ether) and carboxyethyl cellulose, which are carboxylic acid group-containing celluloses. Other examples include cellulose derivatives such as nitrocellulose, cellulose acetate propionate, cellulose acetate, and cellulose sulfuric acid ester.

<Thickening polysaccharides>

There are no particular limitations on the thickening polysaccharides that can be used in the present invention, and examples thereof include naturally occurring simple polysaccharides, naturally occurring composite polysaccharides, synthetic simple polysaccharides, and synthetic composite polysaccharides that are generally known. For the details of these polysaccharides, reference can be made to " Seikagaku Jiten (Encyclopedia of Biochemistry (2nd Edition), published by Tokyo Kagaku Dojin"; "Shokuhin Kogyo (Food Industry)", Vol. 31 (1988), p. 21, and the like.

The thickening polysaccharides as used in the present invention are polymers of saccharides having a large number of hydrogen bonding groups in the molecule, and are polysaccharides having a characteristic that the difference between the viscosity at a low temperature and the viscosity at a high temperature is large due to the temperature-induced difference in the hydrogen bonding force between molecules. Furthermore, the thickening polysaccharides are polysaccharides that cause, when metal oxide fine particles are added, an increase in viscosity that is thought to be caused by hydrogen bonding with the metal oxide fine particles at a low temperature, in which the width of the viscosity increase is such that the addition of the thickening polysaccharides causes the viscosity at 15 to be increased by 1.0 mPa·s or more. The thickening polysaccharides are polysaccharides having an ability to increase the viscosity by preferably 5.0 mPa·s or more, and more preferably 10.0 mPa·s or more.

Examples of the thickening polysaccharides that can be applied to the present invention include galactans (for example, agarose and agaropectin), galactomannoglycans (for example, locust bean gum and guaran), xyloglucans (for example, tamarind gum), glucomannoglycans (for example, konjac mannan, wood-derived glucomannan, and xanthan gum), galactoglucomanno glycans (for example, coniferous wood-derived glycans), arabinogalactoglycans (for example, soybean-derived glycans and microbial-derived glycans), glucorhamnoglycans (for example, gellan gum), glycosaminoglycans (for example, hyaluronic acid and keratan sulfate), alginic acid and alginates, agar, and naturally occurring high molecular weight polysaccharides derived from red algae, such as $\kappa$-carrageenan, $\lambda$-carrageenan, t-carrageenan and furcellaran. From the viewpoint of not lowering the dispersion stability of the metal oxide fine particles that are co-present in the coating liquid, preferably, polysaccharides having constituent units that do not have any carboxylic acid groups or sulfonic acid groups are preferred. Such polysaccharides are preferably, for example, polysaccharides composed only of pentoses such as L-arabitose, D-ribose, 2-deoxyribose, and D-xylose; and hexoses such as D-glucose, D-fructose, D-mannose, and D-galactose. Specifically, tamarind seed gum that is known as a xyloglucan in which the main chain is composed of glucose and the side chains are also composed of glucose; guar gum, cationized guar gum, hydroxypropyl guar gum, locust bean gum, and tara gum that are known as galactomannans in which the main chain is composed of mannose and the side chains are composed of glucose; and arabinogalactans in which the main chain is composed of galactose and the side chains are composed of arabinose, can be preferably used. According to the present invention, tamarind, guar gum, cationized guar gum, and hydroxypropyl guar gum are particularly preferred.

According to the present invention, two or more kinds of thickening polysaccharides can also be used in combination.

<Polymers having reactive functional groups>

The water soluble polymer that can be applied to the present invention may be a polymer having reactive functional groups. Examples thereof include polyvinyl pyrrolidones; acrylic resins such as polyacrylic acid, acrylic acid-acrylonitrile copolymers, potassium acrylate-acrylonitrile copolymers, vinyl acetate-acrylic acid ester copolymers, and acrylic acid-acrylic acid ester copolymers; styrene-acrylic acid resins such as styrene-acrylic acid copolymers, styrene-methacrylic acid copolymers, styrene-methacrylic acid-acrylic acid ester copolymers, styrene-$\alpha$-methylstyrene-acrylic acid copolymers, and styrene-$\alpha$-methylstyrene-acrylic acid-acrylic acid ester copolymers; styrene-sodium styrene sulfonate copolymers, styrene-2-hydroxyethyl acrylate copolymers, styrene-2-hydroxyethyl acrylate-potassium styrene sulfonate copolymers, styrene-maleic acid copolymers, styrene-maleic anhydride copolymers, vinylnaphthalene-acrylic acid copolymers, vinylnaphthalene-maleic acid copolymers; vinyl acetate-based copolymers such as vinyl acetate-maleic acid ester copolymers, vinyl acetate-crotonic acid copolymers, and vinyl acetate-acrylic acid copolymers; and salts thereof. Among these, particularly preferred examples include polyvinyl pyrrolidones and copolymers containing them.

(Metal oxide particle A)

In the present invention, the metal oxide particle A which can be applied to the high refractive index layer is preferably metal oxide particles having a refractive index in the range of 2.0 to 3.0. More specifically, examples thereof include titanium oxide, zirconium oxide, zinc oxide, synthetic amorphous silica, colloidal silica, alumina, colloidal alumina, lead titanate, red lead, yellow lead, zinc yellow, chromium oxide, ferric oxide, iron black, copper oxide, magnesium oxide, magnesium hydroxide, strontium titanate, yttrium oxide, niobium oxide, europium oxide, lanthanum oxide, zirconia, and tin oxide. Furthermore, composite oxide particles composed of plural metals; core · shell particles in which the metal composition changes in a core · shell shape; and the like can also be used.

In order to form a high refractive index layer that is transparent and has a higher refractive index, it is preferable to incorporate oxide fine particles of metals having high refractive indices, such as titanium and zirconium, that is, titanium oxide fine particles and/or zirconia oxide fine particles, into the high refractive index layer according to the present invention. Among these, from the viewpoint of the stability of the coating liquid for forming a high refractive index layer, titanium oxide is more preferred. Furthermore, among titanium oxides, since the rutile type (tetragonal system) has lower catalytic activity than the anatase type, weather resistance of the high refractive index layer or an adjacent layer is increased, and the refractive index is further increased, which is more preferable.

Furthermore, when core · shell particles are used as the metal oxide particle A in the high refractive index layer according to the present invention, core shell particles in which titanium oxide particles are surface coated with a silicon-containing hydrated oxide are even more preferred in view of the effect that interlayer mixing between the high refractive index and an adjacent layer is suppressed by the interaction between the silicon-containing hydrated oxide of the shell layer and the first water soluble binder resin.

Regarding the aqueous solution containing titanium oxide particles that are used in the core of the core · shell particles according to the present invention, it is preferable to use an aqueous solution having a pH in the range of 1.0 to 3.0, which is measured at 25°C, and prepared by hydrophobicizing the surface of a water-based titanium oxide sol in which the zeta potential of titanium oxide particles is positive, and thereby making the titanium oxide particles dispersible in an organic solvent.

When the content of the metal oxide particle A according to the present invention is in the range of 15 to 80% by mass relative to 100% by mass of the solid content of the high refractive index layer, it is preferable from the viewpoint of imparting a difference in the refractive index between the high refractive index layer and the low refractive index layer. Furthermore, the content of the metal oxide particle A is more preferably in the range of 20 to 77% by mass, and even more preferably in the range of 30 to 75% by mass. Meanwhile, in a case in which the metal oxide particle A other than the core · shell particles are included in the high refractive index layer of the present invention, the content is not particularly limited as long as the content is in the extent that the effects of the present invention can be provided.

According to the present invention, the volume average particle size of the metal oxide particle A applied to the high refractive index layer is preferably 30 nm or less, more preferably in the range of 1 to 30 nm, and even more preferably in the range of 5 to 15 nm. When the volume average particle size is in the range of 1 to 30 nm, it is preferable from the viewpoint of having a low haze value and excellent visible light transmissibility.

The volume average particle size of the metal oxide particle A according to the present invention is a volume-weighted average particle size obtained by measuring the particle sizes of any 1,000 particles by a method of observing the particles themselves by a laser diffraction scattering method, a dynamic light scattering method or electron microscopy, or by a method of observing particle images appearing at a cross-section or the surface of the refractive index layer by electron microscopy; and calculating, for a population of particulate metal oxide in which particles having particle sizes of d1, d2, ..., di, ... dk, respectively, exist in the numbers of n1, n2, ... ni, ..., nk, respectively, when the volume per particle is designated as vi, the average particle size represented by formula: volume average particle size $mv = \{\sum(vi \cdot di)\}/\{\sum(vi)\}$.

(Curing agent)

According to the present invention, a curing agent can also be used in order to cure the water soluble binder resin A applied to the high refractive index layer. Regarding the curing agent that can be used together with the first water soluble binder resin, there are no particular limitations as long as the curing agent is capable of causing a curing reaction with the relevant water soluble binder resin. For example, when a polyvinyl alcohol is used as the water soluble binder resin A, boric acid and salts thereof are preferred as the curing agent. In addition to the boric acid and salts thereof, known agents can be used, and generally, a compound having a group that is capable of reacting with a polyvinyl alcohol, or a compound that accelerates reactions between different groups carried by a polyvinyl alcohol is appropriately selected and used.

Specific examples of the curing agent include epoxy-based curing agents (diglycidyl ethyl ether, ethylene glycol diglycidyl ether, 1,4-butanediol diglycidyl ether, 1,6-diglycidylcyclohexane, N,N-diglycidyl-4-glycidyloxyaniline, sorbitol polyglycidyl ether, glycerol polyglycidyl ether, and the like), aldehyde-based curing agents (formaldehyde, glyoxal, and the like), activated halogen-based curing agents (2,4-dichloro-4-hydroxy-1,3,5-s-triazine, and the like), activated vinyl-based compounds (1,3,5-trisacryloylhexahydro-s-triazine, bisvinylsulfonyl methyl ether, and the like), and aluminum alum.

Boric acid and salts thereof refer to an oxo acid having a boron atom as the central atom, and salts thereof. Specific examples include ortho-boric acid, diboric acid, metaboric acid, tetraboric acid, pentaboric acid, and octaboric acid, and salts thereof.

[3.2.2: Low refractive index layer]

The low refractive index layer according to the present invention contains the water soluble binder resin B and the metal oxide particle B, and may optionally further contain a curing agent, a surface coating component, a particle surface protective agent, a binder resin, a surface active agent, and various additives.

The refractive index of the low refractive index layer according to the present invention is preferably in the range of 1.10 to 1.60, and more preferably in the range of 1.30 to 1.50.

(Water soluble binder resin B)

As the water soluble binder resin B which is applied to the low refractive index layer according to the present invention, a polyvinyl alcohol is preferably used. Furthermore, it is more preferable that a polyvinyl alcohol (B), which has a degree of saponification different from the degree of saponification of the polyvinyl alcohol (A) present in the high refractive index layer, is used in the low refractive index layer according to the present invention. Meanwhile, explanations on polyvinyl alcohol (A) and the polyvinyl alcohol (B), such as a preferred weight average molecular weight of the second water soluble binder resin, are described in the section for the water soluble binder resin for the high refractive index layer, and thus, further explanation will not be given here.

The content of the water soluble binder resin B in the low refractive index layer is preferably in the range of 20 to 99.9% by mass, and more preferably in the range of 25 to 80% by mass, relative to 100% by mass of the solid content of the low refractive index layer.

Regarding a water soluble binder resin other than polyvinyl alcohol, which can be included in the low refractive index layer according to the present invention, any resin can be used without any limitation as long as the low refractive index layer containing metal oxide particle B can form a coating film. However, when environmental problems or flexibility of the coating film is considered, water soluble polymers (particularly, gelatin, thickening polysaccharides, and polymers having reactive functional groups) are preferred. These water soluble polymers may be used singly, or two or more kinds thereof may be used in combination.

With regard to the low refractive index layer, the content of another binder resin that is used in combination with the polyvinyl alcohol preferably used as the water soluble binder resin B can be set to the range of 0 to 10% by mass relative to 100% by mass of the solid content of the low refractive index layer.

The low refractive index layer of the heat ray shielding film according to the present invention may also contain water soluble polymers such as celluloses, thickening polysaccharides and polymers having reactive functional groups. Regarding these water soluble polymers such as celluloses, thickening polysaccharides and polymers having reactive functional groups, since the same polymers as the water soluble polymers described above for the high refractive index layer are used, further explanation will not be given here.

(Metal oxide particle B)

Regarding the metal oxide particle B applied to the low refractive index layer according to the present invention, it is preferable to use silica (silicon dioxide), and specific examples thereof include synthetic amorphous silica and colloidal silica. Among these, it is more preferable to use an acidic colloidal silica sol, and it is even more preferable to use a colloidal silica sol dispersed in an organic solvent. Furthermore, in order to further decrease the refractive index, hollow fine particles having cavities in the interior of particles can be used as the metal oxide particle B applied to the low refractive index layer, and particularly, hollow fine particles of silica (silicon dioxide) are preferred.

According to the present invention, the metal oxide particle B (preferably, silicon dioxide) applied to the low refractive index layer preferably has an average particle size in the range of 3 to 100 nm. The average particle size of primary particles of silicon dioxide that is dispersed in the form of primary particles (particle size in the state of a dispersion liquid before coating) is more preferably in the range of 3 to 50 nm, even more preferably in the range of 3 to 40 nm, particularly preferably in the range of 3 to 20 nm, and most preferably 4 to 10 nm. Furthermore, the average particle size of secondary particles is preferably 30 nm or less, from the viewpoint having a low haze value and excellent visible light transmissibility.

According to the present invention, the average particle size of the metal oxide fine particle B applied to the low refractive index layer can be determined by observing the particles themselves or particles appearing at a cross-section or the surface of the refractive index layer by electron microscopy, measuring the particle sizes of any 1,000 particles, and calculating the simple mean value thereof (number average). Herein, the particle size of individual particles is represented by the diameter obtainable when a circle having an area equivalent to the projected area is assumed.

The colloidal silica used in the present invention is obtainable by double decomposition of sodium silicate by an acid or the like, or by heating and aging a silica sol obtainable by passing through an ion-exchange resin bed. Examples thereof include the colloidal silica described in JP 57-14091 A, JP 60-219083 A, JP 60-219084 A, JP 61-20792 A, JP 61-188183 A, JP 63-17807 A, JP 4-93284 A, JP 5-278324 A, JP 6-92011 A, JP 6-183134 A, JP 6-297830 A, JP 7-81214 A, JP 7-101142 A, JP 7-179029 A, JP 7-137431 A, and International Publication No. 94/26530 or the like.

For such colloidal silica, synthetic products may be used, or commercially available products may be used. Colloidal silica may be a product of which surface is cationically modified, or may be a product treated with Al, Ca, Mg, Ba or the like.

In the present invention, hollow particles can be as the metal oxide particle B which is applied to the low refractive index layer. In the case of using hollow particles, the average particle hole diameter is preferably in the range of 3 to 70 nm, in the range of more preferably 5 to 50 nm, and even more preferably in the range of 5 to 45 nm. Meanwhile, the average particle hole diameter of hollow particles is the average value of the inner diameters of hollow particles. According to the present invention, when the average particle hole diameter of the hollow particles is in the range described above, the refractive index of the low refractive index layer is made sufficiently low. The average particle hole diameter is obtained by randomly observing 50 or more hole diameters that can be observed as a circular shape, an elliptical shape, or a substantially circular or elliptical shape, determining the hole diameters of the various particles, and determining the number average value thereof. Meanwhile, in the present specification, the average particle hole diameter means the smallest distance among the distances spanning between two parallel lines that touch the outer circumference of a hole diameter that can be observed as a circular shape, an elliptical shape or a substantially circular or elliptical shape.

The metal oxide particle B which is applied to the low refractive index layer may be surface coated with a surface coating component.

The content of the metal oxide particle B in the low refractive index layer is preferably in the range of 0.1 to 70% by mass, more preferably in the range of 30 to 70% by mass, and even more preferably in the range of 45 to 65% by mass, relative to 100% by mass of the solid content of the low refractive index layer.

(Curing agent)

The low refractive index layer according to the present invention may further contain a curing agent, as in the case of the high refractive index layer. The curing agent is not particularly limited as long as the agent induces a curing reaction with the water soluble binder resin B contained in the low refractive index layer. Particularly, the curing agent in the case of using a polyvinyl alcohol as the water soluble binder resin B applied to the low refractive index layer is preferably boric acid and salts thereof, and/or borax. Furthermore, in addition to boric acid salts thereof, any known curing agents can be used.

The content of the curing agent in the low refractive index layer is preferably in the range of 1 to 10% by mass, and more preferably in the range of 2 to 6% by mass, relative to 100% by mass of the solid content of the low refractive index layer.

Particularly, the total amount of use of the curing agent in the case of using a polyvinyl alcohol as the water soluble binder resin B is preferably in the range of 1 to 600 mg per gram of the polyvinyl alcohol, and more preferably in the range of 100 to 600 mg per gram of the polyvinyl alcohol.

Specific examples of the curing agent and the like are the same as those for the high refractive index layer as described above, and therefore, further explanation will not be given here.

[3.2.3: Additives for each refractive index layer]

In the high refractive index layer and the low refractive index layer according to the present invention, various additives can be used as necessary. Furthermore, the content of the additives in the high refractive index layer is preferably in the range of 0 to 20% by mass relative to 100% by mass of the solid content of the high refractive index layer. Examples of the relevant additives will be described below.

(Surface active agent)

According to the present invention, at least one layer of the high refractive index layer and the low refractive index layer may further contain a surface active agent. Regarding the surface active agent, any kind of amphoteric surface active agents, cationic surface active agents, anionic surface active agents and nonionic surface active agents can be used. More preferably a betaine-based amphoteric surface active agent, a quaternary ammonium salt-based cationic surface active agent, a dialkyl sulfosuccinic acid salt-based anionic surface active agent, an acetylene glycol-based nonionic surface active agent, or a fluorine-based cationic surface active agent is preferred.

The amount of addition of the surface active agent according to the present invention is preferably in the range of 0.005 to 0.30% by mass, and more preferably in the range of 0.01 to 0.10% by mass, when the total mass of the coating liquid for high refractive index layer or the coating liquid for low refractive index layer is designated as 100% by mass.

(Amino acid)

The high refractive index layer or low refractive index layer according to the present invention may contain an amino acid having an isoelectric point of 6.5 or less. When an amino acid is included, dispersion property of the metal oxide particles in the high refractive index layer or the low refractive index layer can be enhanced.

The amino acid as used herein means a compound having an amino group and a carboxyl group in the same molecule, and an amino acid of any type such as α-type, β-type or γ-type may be used. Some amino acids have optical isomers; however, With regard to the present invention, there is no difference in the effects caused by optical isomers, and any of the isomers can be used singly or as racemates.

For detailed explanations on amino acids, reference can be made to the descriptions of Kagaku Daijiten (Encyclopedia of Chemistry) 1 Compact Edition (Kyoritsu Shuppan Co., Ltd.; published in 1960), pp. 268-270.

Specific preferred examples of the amino acid include aspartic acid, glutamic acid, glycine, and serine, and particularly, glycine and serine are preferred.

With regard to the isoelectric point of an amino acid, an amino acid has its positive charge and negative charge in the molecule balanced with each other at a particular pH, and the overall charge becomes zero (0). The isoelectric point refers to this pH value. The isoelectric points of various amino acids can be determined by isoelectric point electrophoresis at a low ionic strength.

(Other additives)

In the present invention, various additives that can be applied to the high refractive index layer and the low refractive index layer according to the present invention are listed below. Examples thereof include various known additives, including the ultraviolet absorbing agent described in JP 57-74193 A, JP 57-87988 A, JP 62-261476 A, or the like, discoloration inhibitor, various anionic, cationic or nonionic surface active agents described in JP 57-74192 A, JP 57-87989 A, JP 60-72785 A, JP 61-146591 A, JP 1-95091 A, JP 3-13376 A, or the like, the fluorescent brightening agent, pH adjusting agents such as sulfuric acid, phosphoric acid, acetic acid, citric acid, sodium hydroxide, potassium hydroxide, and potassium carbonate; defoaming agent; lubricating agents such as diethylene glycol; antiseptic, antifungal agent, antistatic agent, mattifying agent, thermal stabilizer, oxidation inhibitor, flame retardant, crystal nucleating agent, inorganic particles, organic particles, viscosity reducing agent, lubricating agent, infrared absorbing agent, colorant, and pigment described in JP 59-42993 A, JP 59-52689 A, JP 62-280069 A, JP 61-242871 A, JP 4-219266 A.

[3.2.4: Method for forming heat ray shielding layer]

The method for forming the heat ray shielding layer according to the present invention is not particularly limited; however, a production method including a step of applying, based on alternate lamination on a transparent resin film, a coating liquid for high refractive index layer containing the water soluble binder resin A and metal oxide particle A, and a coating liquid for low refractive index layer containing the water soluble binder resin B and metal oxide particle B, is preferred.

The coating method is not particularly limited, and examples thereof include a roll coating method, a rod bar coating method, an air knife coating method, a spray coating method, a slide type curtain coating method, and the slide hopper coating method described in US Patent No. 2,761,419, US Patent No. 2,761,791 and the like, and an extrusion coating method. Furthermore, the method for applying plural layers in superposition may be coating by sequential superposition, or may be coating by simultaneous superposition.

Hereinbelow, coating by simultaneous superposition according to a slide hopper coating method, which is a preferred production method (coating method) of the present invention, will be described in detail.

(Solvent)

There are no particular limitations on the solvent for preparing the coating liquid for high refractive index layer and the coating liquid for low refractive index layer, but water, an organic solvent, or a mixed solvent thereof is preferred.

Examples of the organic solvent include alcohols such as methanol, ethanol, 2-propanol, and 1-butanol; esters such as ethyl acetate, butyl acetate, propylene glycol monomethyl ether acetate, and propylene glycol monoethyl ether acetate; ethers such as diethyl ether, propylene glycol monomethyl ether, and ethylene glycol monoethyl ether; amides such as dimethyl formamide and N-methyl pyrrolidone; and ketones such as acetone, methyl ethyl ketone, acetylacetone, and cyclohexanone. These organic solvents may be used singly or as mixtures of two or more kinds thereof.

In view of environmental aspects, convenience of operation and the like, the solvent of the coating liquid is particularly preferably water, or a mixed solvent of water and methanol, ethanol or ethyl acetate.

(Concentration of each constitutional component in coating liquid)

The concentration of the water soluble binder resin A in the coating liquid for high refractive index layer is preferably in the range of 1 to 10% by mass. The concentration of the metal oxide particle A in the coating liquid for high refractive index layer is preferably in the range of 1 to 50% by mass.

The concentration of the water soluble binder resin B in the coating liquid for low refractive index layer is preferably in the range of 1 to 10% by mass. The concentration of the metal oxide particle B in the coating liquid for low refractive index layer is preferably in the range of 1 to 50% by mass.

(Method for preparing coating liquid)

The method for preparing the coating liquid for high refractive index layer and the coating liquid for low refractive index is not particularly limited, and for example, a method of adding a water soluble binder resin, metal oxide particles, and other additives that are added as necessary, and mixing with stirring the components may be used. At this time, there are no particular limitations on the order of addition of the water soluble binder resin, the metal oxide particles, and the other additives that are used as necessary, and the various components may be sequentially added and mixed while stirred, or the various components may be added all at once and mixed while stirred. If necessary, the mixture is prepared to have appropriate viscosity by further using the solvent described above.

According to the present invention, it is preferable to form a high refractive index layer using a water-based coating liquid for high refractive index layer that has been prepared by adding and dispersing core shell particles. At this time, it is preferable to prepare the coating liquid by adding the core · shell particles in the form of a sol having a pH in the range of 5.0 to 7.5, which is measured at 25°C, and a negative zeta potential of the particles, to the coating liquid for high refractive index layer.

(Viscosity of coating liquid)

The viscosity at 40 to 45°C of the coating liquid for high refractive index layer and the coating liquid for low refractive index layer at the time of performing coating by simultaneous superposition by a slide hopper coating method, is preferably in the range of 5 to 150 mPa·s, and more preferably in the range of 10 to 100 mPa·s. Furthermore, the viscosity at 40 to 45°C of the coating liquid for high refractive index layer and the coating liquid for low refractive index layer at the time of performing coating by simultaneous superposition by a slide type curtain coating method, is preferably in the range of 5 to 1200 mPa·s, and more preferably in the range of 25 to 500 mPa·s.

Furthermore, the viscosity at 15°C of the coating liquid for high refractive index layer and the coating liquid for low refractive index layer is preferably in the range of 100 mPa·s or more, more preferably in the range of 100 to 30,000 mPa·s, even more preferably in the range of 3,000 to 30,000 mPa·s, and particularly preferably in the range of 10,000 to 30,000 mPa·s.

(Method for coating and drying)

There are no particular limitations on the method for coating and drying; however, it is preferable to carry out the method by heating the coating liquid for high refractive index layer and the coating liquid for low refractive index layer to 30°C or higher, performing coating by simultaneous superposition of the coating liquid for high refractive index layer and the low refractive index layer on a base material, subsequently first cooling the temperature of the coating film thus formed to preferably 1 to 15°C (setting), and then drying the coating film at or above 10°C. More preferred drying conditions are conditions including a wet bulb temperature of 5 to 50°C and a film surface temperature of 10 to 50°C. Furthermore, regarding the cooling mode immediately after coating, it is preferable to perform cooling in a horizontal setting mode, from the viewpoint of enhancing uniformity of the coating film thus formed.

Regarding the coating thicknesses of the coating liquid for high refractive index layer and the coating liquid for low refractive index layer, the coating liquids may be applied to obtain the preferred thickness upon drying (dry film thickness) as described above.

Herein, the term setting means a process of increasing the viscosity of a coating film composition by means of lowering the temperature by blowing cold air to the coating film or the like, and thereby decreasing fluidity of the materials between various layers and within various layers. A state in which when cold air is blown against the surface of a coating film, and a finger is pressed against the surface of the coating film, nothing sticks to the finger, is defined as a completely set state.

After coating, the time taken until setting is completed after cold air is blown (setting time) is preferably 5 minutes or less, and preferably 2 minutes or less. Furthermore, the lower limit of the time is not particularly limited, but it is preferable to take a time of 45 seconds or longer. If the setting time is too short, there is a risk that mixing of the components in the layer may not sufficiently occur. On the other hand, if the setting time is too long, there is a risk that interlayer diffusion of metal oxide particles may progress, and the difference in the refractive index between the high refractive index layer and the low refractive index layer may be insufficient. In addition, if an increase of elasticity occurs rapidly between a high refractive index layer and a low refractive index layer, the process for setting may not be provided.

Adjusting of the setting time can be achieved by adjusting the concentration of the water soluble binder resin or the concentration of the metal oxide particles, or by adding other components, including various known gelling agents such as gelatin, pectin, agar, carrageenan, and gellan gum.

The temperature of the cold air is preferably in the range of 0 to 25°C, and more preferably in the range of 5 to 10°C. Furthermore, the time for the coating film to be exposed to cold air may vary depending on the transportation rate of the coating film, but the time is preferably in the range of 10 to 120 seconds.

(Preliminary heating step)

As one characteristic of the method for manufacturing a heat ray shielding laminated glass of the present invention, it is preferable that the heat ray shielding film prepared by the above method is subjected, during a preliminary heating step, to a heating treatment at conditions for having the average moisture content of 1.0% by mass or less.

Specifically, as for the temperature for the preliminary heating of the heat ray shielding film during the preliminary heating step, the step is preferably performed in the temperature range of (Tg - 30°C) to (Tg + 10°C) relative to Tg of a transparent resin film constituting the heat ray shielding film. Specific conditions for heating or the like are as described above.

[3.2.5: Other constitutional layers of heat ray shielding film]

The heat ray shielding film according to the present invention may include, for the purpose of adding new functions, on the outermost surface lower to the transparent resin film or opposite to the transparent resin film, one or more functional layers such as a conductive layer, an antistatic layer, a gas barrier layer, an easily adhesive layer (adhesive layer), an antifouling layer, a deodorizing layer, a dripping layer, an easily lubricating layer, a hard coat layer, an abrasion resistant layer, an antireflective layer, an electromagnetic wave shielding layer, an ultraviolet absorbing layer, an infrared absorbing layer, a printed layer, a fluorescence emitting layer, a hologram layer, a releasable layer, an adhesive layer, an adhesive layer, an infrared cutting layer other than the high refractive index layer and the low refractive index layer of the present invention (a metal layer, a liquid crystal layer), and a colored layer (visible light absorbing layer). Hereinbelow, an infrared absorbing layer, a heat insulating layer, and a hard coat layer, which are the representative functional layers that can be applied, will be described.

(Infrared absorbing layer)

The heat ray shielding film according to the present invention may further include an infrared absorbing layer. This infrared absorbing layer is laminated at any arbitrary position; however, in order to obtain the heart-shielding effect of the laminated glass of the present invention more efficiently, it is preferable that the infrared absorbing layer is laminated underneath the heat ray shielding layer as viewed from the light incident side, and it is more preferable that the infrared absorbing layer is laminated on the surface of the transparent resin film which is opposite to the surface where the heat ray shielding layer is laminated. Furthermore, even when an infrared absorbing agent is incorporated into other layers, for example, a hard coat layer, the layer may function as an infrared absorbing layer.

The thickness per layer of the infrared absorbing layer according to the present invention is preferably in the range of 0.1 to 50 $\mu$m, and more preferably in the range of 1 to 20 $\mu$m. When the thickness is 0.1 $\mu$m or more, the infrared absorbing ability tends to be enhanced, and when the thickness is 50 $\mu$m or less, cracking resistance of the coating film is enhanced.

The material that is included in the infrared absorbing layer is not particularly limited, but examples thereof include an ultraviolet-curable resin, a photopolymerization initiator, and an infrared absorbing agent.

The ultraviolet-curable resin has superior hardness and smoothness compared to other resins, and is also advantageous from the viewpoint of the dispersion property of ITO, antimony-doped tin oxide (ATO), or a heat conductive metal oxide. Regarding the ultraviolet-curable resin, any resin capable of forming a transparent layer by curing can be used without any particular limitation, and examples thereof include a silicone resin, an epoxy resin, a vinyl ester resin, an acrylic resin, and an allyl ester resin. More preferred is an acrylic resin from the viewpoints of hardness, smoothness, and transparency.

It is preferable for the acrylic resin to include reactive silica particles having photosensitive groups with photopolymerization reactivity introduced on the surface (hereinafter, also simply referred to as "reactive silica particles"), which are described in International Publication 2008/035669, from the viewpoints of hardness, smoothness, and transparency. Herein, examples of a photosensitive group having photopolymerizability include polymerizable unsaturated groups, which are represented by a (meth)acryloyloxy group. Furthermore, the ultraviolet-curable resin may also include a compound capable of photopolymerization reaction with this photosensitive group having photopolymerization reactivity that has been introduced onto the surface of the reactive silica particles, for example, an organic compound having a polymerizable unsaturated group. Furthermore, silica particles in which a polymerizable unsaturated group-modified hydrolysable silane produces a silyloxy group between silica particles by a hydrolysis reaction of a hydrolysable silyl group and is thereby chemically bonded to the silica particles, can be used as the reactive silica particles. Herein, the average particle size of the reactive silica particles is preferably in the range of 0.001 to 0.1 $\mu$m. When the average particle size is adjusted to such a range, transparency, smoothness and hardness can be satisfied in a well-balanced manner.

Furthermore, the acrylic resin may contain a constituent unit derived from a fluorine-containing vinyl monomer, from the viewpoint of adjusting the refractive index. Examples of the fluorine-containing vinyl monomer include fluoroolefins (for example, fluoroethylene, vinylidene fluoride, tetrafluoroethylene, and hexafluoropropylene), partially or completely fluorinated alkyl ester derivatives of (meth) acrylic acid (for example, VISCOAT 6FM (trade name, manufactured by Osaka Organic Chemical Industry, Ltd.) and R-2020 (trade name, manufactured by Daikin Industries, Ltd.)), and fully or partially fluorinated vinyl ethers.

Regarding the photopolymerization initiator, any known agents can be used, and the compounds can be used either singly or in combination of two or more kinds thereof.

The inorganic infrared absorbing agent that can be included in the infrared absorbing layer is preferably tin-doped indium oxide (ITO), antimony-doped tin oxide (ATO), zinc antimonate, lanthanum hexafluoride ($LaB_6$), cesium-containing tungsten oxide ($Cs_{0.33}WO_3$), or the like, from the viewpoints of visible light transmittance, infrared absorption property, dispersion suitability in a resin, and the like. These can be used singly, or in combination of two or more kinds thereof. The average particle size of the inorganic infrared absorbing agent is preferably in the range of 5 to 100 nm, and more preferably in the range of 10 to 50 nm. If the average particle size of the inorganic infrared absorbing agent is 5 nm or more, a good dispersion property in a resin or infrared absorption property can be obtained. On the other hand, if it is 100 nm or less, desirable visible light transmittance can be obtained. Meanwhile, measurement of the average particle size is carried out by taking images by transmission electron microscopy, randomly extracting, for example, fifty particles, measuring the particle sizes thereof, and calculating the average of these particle sizes. Furthermore, when the shape of the particles is not a spherical shape, the particle size is defined as a value obtained by measuring the major axis and calculating an average.

The content of the inorganic infrared absorbing agent in the infrared absorbing layer is preferably in the range of 1 to 80% by mass, and more preferably in the range of 1 to 50% by mass, relative to the total mass of the infrared absorbing layer. When the content is 1% by mass or more, a sufficient infrared absorbing effect is exhibited, and when the content is 80% by mass or less, a sufficient amount of visible light can be transmitted.

The infrared absorbing layer may include metal oxides other than those described above, or other infrared absorbing agents such as an organic infrared absorbing agent and a metal complex, to the extent that the effects of the present invention are provided. Specific examples of these other infrared absorbing agents include, for example, a diimmonium-based compound, an aluminum-based compound, a phthalocyanine-based compound, an organic metal complex, a cyanine-based compound, an azo compound, a polymethine-based compound, a quinone-based compound, a diphenylmethane-based compound, and a triphenylmethane-based compound.

The method for forming the infrared absorbing layer is not particularly limited, and for example, a method of preparing a coating liquid for infrared absorbing layer containing the above-described various components, subsequently applying the coating liquid using a wire bar or the like, and drying the coating liquid, may be used.

(Heat insulating layer)

According to the present invention, a heat insulating layer having pores (hereinafter, also simply referred to as a heat insulating layer) may be provided on any one side of the transparent resin film. When a heat insulating layer is provided, the risk of so-called thermal cracks can be reduced. Furthermore, the heat-shielding effect of the laminated glass of the present invention can be further enhanced.

The heat insulating layer according to the present invention preferably has a thermal conductivity which is in the range of 0.001 to 0.2 W/(m·K), and more preferably in the range of 0.005 to 0.15 W/(m·K). When the thermal conductivity is 0.001 W/(m·K) or more, slight heat transfer and heat diffusion occurs, and damages such as swelling, peeling and discoloration of films do not occur easily. Furthermore, when the thermal conductivity is 0.2 W/(m·K) or less, heat transfer and heat diffusion can be suppressed, heat conduction to glass is suppressed effectively, and thermal cracks in glass do not occur easily.

The thermal conductivity can be measured, for example using a hot wire probe type thermal conductivity analyzer (manufactured by Kyoto Electronics Manufacturing Co., Ltd., QTM-500).

Porosity of the heat insulating layer according to the present invention is preferably in the range of 30 to 95%, and more preferably in the range of 60 to 95%. When the porosity is 30% or more, heat insulating performance is exhibited, and thermal cracks in glass do not easily occur. Furthermore, when porosity is 95% or less, layer structure strength can be maintained to the extent that the structure is not destroyed even during handling.

The material that forms the heat insulating layer is not particularly limited, but examples thereof include a combination of inorganic oxide particles and a resin binder, and a foamed resin.

Regarding the inorganic oxide particles, any known material can be used. Specific examples include silica ($SiO_2$), alumina ($Al_2O_3$), zirconium oxide ($ZrO_2$), zeolite, titanium oxide ($TiO_2$), barium titanate ($BaTiO_3$), strontium titanate ($SrTiO_3$), calcium titanate ($CaTiO_3$), aluminum borate, iron oxide, calcium carbonate, barium carbonate, lead oxide, tin oxide, cerium oxide, calcium oxide, trimanganese tetroxide, magnesium oxide, niobium oxide, tantalum oxide, tungsten oxide, antimony oxide, aluminum phosphate, calcium silicate, zirconium silicate, ITO, titanium silicate, mesoporous silica (FSM-16, MCM41, and the like), montmorillonite, saponite, vermiculite, hydrotalcite, kaolinite, kanemite, illite, magadiite, and kenyaite. These can be used either singly or in combination of two or more kinds thereof. Furthermore, composite oxides of these can also be preferably used. Among these, neutral to acidic inorganic oxide particles are preferred from the viewpoint of the strength of the heat insulating layer. Specifically, zirconium oxide, montmorillonite, saponite, vermiculite, hydrotalcite, kaolinite, kanemite, tin oxide, tungsten oxide, titanium oxide, aluminum phosphate, silica, zinc oxide, and alumina are preferred, and more preferred are silica particles or alumina particles. Silica particles and alumina particles are industrially easily available at low cost, and these particles can have the surface modified relatively easily with crosslinkable functional groups, as they have reaction-active hydroxyl groups on the surface.

The inorganic oxide particles may be particles having porosity. The inorganic oxide particles having porosity are inorganic oxide particles having numerous fine pores at the surface of the particles or in the interior thereof, and the specific surface area of the particles is preferably in the range of 500 to 1000 $m^2/g$. When the specific surface area is 500 $m^2/g$ or more, the void ratio is increased, and thus heat insulating property tends to be enhanced. Furthermore, when the specific surface area is 1000 $m^2/g$ or less, the film strength of the heat insulating layer tends to increase.

Regarding such inorganic oxide machine particles having porosity, for example, nanometer-sized composite oxide fine particles having a low refractive index, in which the surface of porous inorganic oxide particles with silica or the like, as described in JP 7-133105 A ; and nanometer-sized silica-based fine particles having a cavity in the interior and having a low refractive index, which are formed from silica and an inorganic oxide other than silica, as described in JP 2001-233611 A; and the like are also suitable.

The average particle size of the inorganic oxide particles is preferably in the range of 1 to 200 nm. When the average particle size is 1 nm or more, the void ratio is increased, and the heat insulating property tends to be enhanced. When the average particle size is 200 nm or less, the film strength of the heat insulating layer tends to be enhanced.

Furthermore, the inorganic oxide particles included in the heat insulating layer may be hollow particles from the viewpoint that the pore size of the pores or the thickness of the outer wall of the heat insulating layer structure can be easily controlled. The hollow particles thus used may be obtained by a method of coating the surface of a template with an inorganic oxide using a sol-gel solution of a metal alkoxide, a silane coupling agent or the like, in which a template of inorganic nanoparticles having a predetermined particle size is dispersed, or a reactive resin monomer solution, and then dissolving the template in the inside to make the particles hollow. The hollow particles may be not only particles having the outer wall entirely closed, but also particles having a structure in which a portion of the outer wall is open. Also, regarding the material used for the outer wall, silica, metal oxides, organic resin materials and the like can be used without limitation; however, it is preferable to use silica or a silane coupling agent that forms organically modified silica, in order to secure the mechanical strength of the heat insulating layer.

The average cavity size of the hollow particles is preferably 80 nm or less, and more preferably 50 nm or less, in order to secure the heat insulating property and transparency. Furthermore, the average thickness of the outer wall is preferably in the range of 1 to 7 nm, and more preferably in the range of 1 to 5 nm. When the thickness of the outer wall is 7 nm or less, transparency of the heat insulating layer tends to increase, and when the thickness is 1 nm or more, the mechanical strength of the heat insulating layer tends to increase.

The average particle size of these inorganic oxide particles is a volume average value of the diameter when various particles are assumed to be spheres having an identical volume (sphere-converted particle size), and this value can be determined by observation by electron microscopy. That is, the average particle size is a value obtained by measuring 200 or more inorganic oxide fine particles that are available in a certain viewing field by electron microscopic observation of the inorganic oxide particles, determining the sphere-converted particle sizes of the respective particles, and determining the average value thereof.

For the inorganic oxide particles of the present invention, particles that have been surface-modified with a silane coupling agent or the like on the particle surface can also be used. The surface modifying group is not particularly limited, but a crosslinkable functional group capable of crosslinking with a nitrogen-containing aromatic polymer having crosslinkable functional groups at the chain ends is preferably used. Herein, examples of the crosslinkable functional group include groups having a carbon-carbon unsaturated bond, such as a vinyl group, an acryl group, a methacryl group, and an allyl group; cyclic ether groups such as an epoxy group and an oxetane group; an isocyanate group, a hydroxyl group, and a carboxyl group.

Regarding the method of providing a crosslinkable functional group on the surface of inorganic oxide particles (surface modification method), a method of allowing a silane compound having the crosslinkable functional group to react with the surface of the inorganic oxide particles is preferably used. Examples of the silane compound having a crosslinkable functional group include monofunctional to trifunctional alkoxysilanes, a chlorosilane compound having a crosslinkable functional group, and a disilazane compound having a crosslinkable functional group.

The content of the inorganic oxide particles in the heat insulating layer is not particularly limited, but the content is preferably in the range of 10 to 95% by mass, and more preferably in the range of 50 to 90% by mass, relative to the total mass of the heat insulating layer. When the content is 10% by mass or more, the void ratio is increased, and the heat insulating property tends to be enhanced. When the content is 95% by mass or less, the mechanical strength of the heat insulating layer tends to increase.

When the heat insulating layer contains inorganic oxide particles, it is preferable for the heat insulating layer to contain a small amount of a resin binder, from the viewpoint of flexibility of the coating film and from the viewpoint of pore formation.

Examples of the resin binder which can be applied include thermoplastic resins and polymers having rubber elasticity. Specific examples thereof include water soluble polymers such as starch, carboxymethyl cellulose, cellulose, diacetyl cellulose, methyl cellulose, hydroxyethyl cellulose, hydroxypropyl cellulose, sodium alginate, polyacrylic acid, polysodium acrylate, polyvinyl phenol, polyvinyl methyl ether, polyvinyl alcohol, polyvinyl pyrrolidone, polyacrylonitrile, polyacrylamide, polyhydroxy (meth)acrylate, and styrene-maleic acid copolymers; and emulsion (latex) or suspension of polyvinyl chloride, polytetrafluoroethylene, polyvinylidene fluoride, tetrafluoroethylene-hexafluoropropylene copolymer, vinylidene fluoride-tetrafluoroethylene hexafluoropropylene copolymer, polyethylene, polypropylene, ethylene-propylene-diene terpolymer (EPDM), sulfonated EPDM, a polyvinyl acetal resin, (meth) acrylic acid ester copolymers containing (meth) acrylic acid esters such as methyl methacrylate and 2-ethylhexyl acrylate, (meth) acrylic acid ester-acrylonitrile copolymer, polyvinyl ester copolymers containing vinyl esters such as vinyl acetate, styrenebutadiene copolymer, acrylonitrile-butadiene copolymer, polybutadiene, neoprene rubber, fluorine rubber, polyethylene oxide, a polyester polyurethane resin, a polyether polyurethane resin, a polycarbonate polyurethane resin, a polyester resin, a phenolic resin, and an epoxy resin. Among them, water soluble polymers are preferred, and polyvinyl alcohol is more preferably used.

The content of these resin binders is not particularly limited, but the content is preferably in the range of 5 to 90% by mass, and more preferably in the range of 10 to 50% by mass, relative to the total mass of the heat insulating layer. When the content is 5% by mass or more, flexibility of the heat insulating layer tends to increase, and when the content is 90% by mass or less, porosity can be obtained, and thus a heat insulating layer having higher heat insulating property can be formed.

Examples of the foamed resin used as the material of the heat insulating layer include, for example, foams of polyolefins such as polyurethane, polystyrene, polyethylene, and polypropylene; a phenolic resin, polyvinyl chloride, a urea resin, polyimide, and a melamine resin. These can be used either singly or in combination of two or more kinds thereof. Among these, from the viewpoint of moldability, formed polystyrene or foamed polyurethane is preferred.

Furthermore, in the heat insulating layer, a crosslinking agent may also be used from the viewpoint of further increasing the film strength. Crosslinking agents are roughly classified into inorganic agents and organic agents, but all of them can obtain a sufficient effect for the present invention. These crosslinking agents can be used either singly or in combination of two or more kinds.

Examples of the inorganic crosslinking agents that are used include, for example, acids having boron atoms (boric acid, ortho-boric acid, diboric acid, metaboric acid, tetraboric acid, pentaboric acid, and the like) or salts thereof, zinc salts (zinc sulfate, and the like), copper salts (copper sulfate, and the like), zirconium salts (zirconyl nitrate, zirconyl acetate, and the like), aluminum salts (aluminum sulfate and the like), and titanium salts (titanium lactate and the like). Among these, preferred inorganic crosslinking agents are acids having boron atoms or salts thereof, aluminum salts, and zirconium salts, and more preferred are zirconium salts.

Furthermore, examples of the organic crosslinking agents include aldehyde-based crosslinking agents (formalin, glyoxal, dialdehyde starch, polyacrolein, N-methylol urea, N-methylol melamine, N-hydroxyl methylphthalimide, and the like), active vinyl-based crosslinking agents (bisvinylsulfonylmethylmethane, tetrakisvinylsulfonyl methylmethane, N,N,N-trisacryloyl-1,3,5-hexahydrotriazine, and the like), epoxy-based crosslinking agents, and polyisocyanate-based crosslinking agents. Among these, preferred examples include polyisocyanate-based crosslinking agents, epoxy-based crosslinking agents, and aldehyde-based crosslinking agents, and more preferred are polyisocyanate-based crosslinking agents and epoxy-based curing agents that exhibit satisfactory reaction with hydroxyl groups.

An epoxy-based crosslinking agent is a compound having at least two glycidyl groups in the molecule, and for example, numerous crosslinking agents are commercially available under the trade name of DENACOL (registered trademark) from Nagase ChemteX Corporation.

A polyisocyanate-based crosslinking agent is a compound having at least two isocyanate groups in the molecule, and has high reactivity with a hydroxyl group or the like. Main examples of the isocyanate-based crosslinking agent include toluylene diisocyanate, diphenylmethane diisocyanate, hexamethylene diisocyanate, isophorone diisocyanate, and modification products or prepolymers thereof; polyfunctional aromatic isocyanate, aromatic polyisocyanate, polyfunctional aliphatic group isocyanate, block type polyisocyanate, and polyisocyanate prepolymers. The details of these polyiasocyanate-based crosslinking agents are described in, for example, Kakyozai Handobuku (Handbook of Crosslinking Agents) (published by Taiseisha, Ltd., published in October, 1981).

For both the inorganic crosslinking agents and organic crosslinking agents, the crosslinking agent is preferably used approximately in an amount in the range of 1 to 50% by mass, and more preferably used in an amount in the range of 2 to 40% by mass, with respect to the resin binder, from the viewpoint of the film strength and flexibility of the heat insulating layer.

The method for supplying these crosslinking agents to the heat insulating layer is not particularly limited, and for example, a crosslinking agent may be added to a coating liquid for forming a heat insulating layer, or a crosslinking agent may be supplied by providing a heat insulating layer and then overcoating the crosslinking agent on the heat insulating layer. In order to overcoat the crosslinking agent, the coating process may be carried out simultaneously or immediately after the application of the coating liquid for forming a heat insulating layer. At this time, the method for applying the crosslinking agent may be coating using a coater or the like, may be coating according to a spraying method, or may be a method of coating by immersing in a crosslinking agent solution.

Subsequently, the method for forming a heat insulating layer will be described.

The method for forming the heat insulating layer of the present invention is not particularly limited, but when the heat insulating layer contains inorganic oxide particles and a resin binder, a wet coating system is preferred. Specifically, the heat insulating layer can be formed by mixing inorganic oxide particles, a resin binder, and optionally a crosslinking agent with a solvent, thereby preparing a coating liquid, subsequently applying the coating liquid on a base material, and drying the coating liquid.

Regarding the aforementioned solvent, any solvent capable of uniformly dispersing inorganic oxide particles, a resin binder and a crosslinking agent may be used. Specifically, one kind or two or more kinds of water, methanol, ethanol, 2-propanol, N-methyl pyrrolidone, dimethyl formamide, dimethyl acetamide, N-methyl formamide and the like can be used. At this time, various additives may be added in order to stabilize the coating liquid (dispersion liquid). These additives are not particularly limited as long as they are materials that can be removed by heating, or materials that do not destroy pores of the porous heat insulating layer.

Regarding the coating method using a coating liquid, the method is not particularly limited as long as it is a method capable of applying the coating liquid approximately uniformly to a desired thickness. Examples thereof include a screen printing method, a bar coating method, a roll coating method, a reverse coating method, a gravure printing method, a doctor blade method, and a die coating method. Regarding the mode of coating, continuous coating, intermittent coating, stripe coating or the like can be used as appropriate according to necessity. Furthermore, it is also possible to perform coating by simultaneous multi-layer coating with the heat ray shielding layer described above.

The drying method after coating is not particularly limited as long as the method is capable of removing the solvent included in the coating liquid, and various methods such as hot air drying, infrared drying, far-infrared drying, microwave drying, electron beam drying, vacuum drying, and supercritical drying can be appropriately selected and used. The drying temperature is not particularly limited, but the drying temperature is preferably 50 to 400°C, and more preferably 70 to 150°C.

Furthermore, when a ultraviolet-curable crosslinking agent is used, the thermal layer may be cured by further irradiating the layer with ultraviolet after coating, and thus the heat insulating layer can be formed.

The method for forming a heat insulating layer in a case in which the heat insulating layer contains a foamed resin is also not particularly limited, and examples thereof include chemical foaming and physical foaming. For instance, in the case of foamed polystyrene, a method of introducing polystyrene and an inert gas in the supercritical state, such as carbon dioxide, as a foaming agent into a supercritical extruder, extruding a polystyrene sheet having fine air bubbles at a high density on the heat ray shielding layer, and forming a heat insulating layer, can be employed.

The thickness of the heat insulating layer formed by the above-described method is not particularly limited, but the thickness is preferably in the range of 100 nm to 200 $\mu$m, and more preferably in the range of 100 nm to 20 $\mu$m. When the thickness is in this range, the heat insulating layer hardly has any adverse effect on transparency of the film, and the heat insulating property can be exhibited.

The heat insulating layer may be provided on at least one side of the transparent resin film; however, in consideration of the mechanism of thermal cracks, it is preferable to provide the heat insulating layer at a position closer to the glass plate. Specifically, an arrangement in which the heat insulating layer is positioned between the transparent resin film and a glass plate is preferred, and an arrangement in which the heat insulating layer is positioned between the heat ray shielding layer and a glass plate is more preferred. Furthermore, when a heat ray shielding film including an infrared absorbing layer is used, an arrangement in which the heat insulating layer is positioned between the infrared absorbing layer and a glass plate is preferred.

Meanwhile, the void ratio of the heat insulating layer can be controlled, in a case in which the heat insulating layer includes inorganic oxide particles and a resin binder, by adjusting the contents of the respective components in the heat insulating layer. Furthermore, when the heat insulating layer includes a foamed resin, the void ratio of the heat insulating layer can be controlled by controlling the conditions for foaming the resin.

(Hard coat layer)

For the heat ray shielding film according to the present invention, it is preferable to laminate a hard coat layer containing an infrared absorbing pigment or the like as a surface protective layer for increasing scratch resistance.

The hard coat layer according to the present invention may be laminated on both surfaces of the transparent resin film of the present invention, or may be laminated on one surface. Depending on the transparent resin film, adhesiveness to an adhesive layer may be poor, or white turbidness may occur when a heat ray shielding layer is formed thereon. Therefore, these problems can be solved by forming a hard coat layer. Furthermore, elongation of the transparent resin film can also be controlled by forming the docoat layer.

The curable resin used in the hard coat layer may be a heat-curable resin or an ultraviolet-curable resin; however, from the viewpoint that molding can be achieved easily, an ultraviolet-curable resin is preferred, and among others, an ultraviolet-curable resin having a pencil hardness of at least 2H is more preferred. These curable resins can be used either singly or in combination of two or more kinds thereof.

Examples of such an ultraviolet-curable resin include polyfunctional acrylate resins such as acrylic acid or methacrylic acid esters having polyhydric alcohols, and polyfunctional urethane acrylate resins synthesized from diisocyanates and acrylic acid or methacrylic acid having polyhydric alcohols. Furthermore, polyether resins having acrylate-based functional groups, polyester resins, epoxy resins, alkyd resins, spiro-acetal resins, polybutadiene resins, polythiol polyene resins, and the like can also be preferably used.

Furthermore, as reactive diluents for these resins, bifunctional or higher functional monomers or oligomers such as 1,6-hexanediol di(meth)acrylate, tripropylene glycol di(meth)acrylate, diethylene glycol di(meth)acrylate, hexanediol (meth)acrylate, pentaerythritol tri(meth)acrylate, trimethylolpropane tri(meth)acrylate, dipentaerythritol hexa(meth)acrylate, and neopentyl glycol di(meth)acrylate; N-vinyl pyrrolidone, acrylic acid esters such as ethyl acrylate and propyl acrylate; methacrylic acid enters such as ethyl methacrylate, propyl methacrylate, isopropyl methacrylate, butyl methacrylate, hexyl methacrylate, isooctyl methacrylate, 2-hydroxyethyl methacrylate, cyclohexyl methacrylate, and nonylphenyl methacrylate; tetrahydrofurfuryl methacrylate and derivatives such as a caprolactone modification product thereof, and monofuncitonal monomers such as styrene, $\alpha$-methylstyrene, and acrylic acid, which have relatively lower viscosity, can be used. These reactive diluents can be used either singly or in combination of two or more kinds.

Furthermore, as photosensitizers (radical polymerization initiators) for these resins, benzoin and alkyl ethers thereof, such as benzoin, benzoin methyl ether, benzoin ethyl ether, benzoin isopropyl ether, and benzyl methyl ketal; acetophenones such as acetophenone, 2,2-dimethoxy-2-phenylacetophenone, 1-hydroxycyclohexyl phenyl ketone; anthraquinones such as methylanthraquinone, 2-ethylanthraquinone, and 2-amylanthraquinone; thioxanthones such as thioxanthone, 2,4-diethylthioxanthone, and 2,4-diisopropylthioxanthone; ketals such as acetophenone dimethyl ketal, and benzyl dimethyl ketal; benzophenones such as benzophenone and 4,4-bismethylaminobenzophenone; and azo compounds can be used. These can be used either singly or in combination of two or more kinds thereof. In addition, these photosensitizers can be used in combination with photoinitiator aids such as tertiary amines such as triethanolamine and methyldiethanolamine; and benzoic acid derivatives such as 2-dimethylaminoethylbenzoic acid and ethyl 4-dimethylaminobenzoate, and the like. The amount of use of these radical polymerization initiators is in the range of 0.5 to 20 parts by mass, and preferably in the range of 1 to 15 parts by mass, relative to 100 parts by mass of the polymerizable components of the resin.

Meanwhile, well-known general coating material additives may also be incorporated as necessary to the curable resin described above. For example, silicone-based or fluorine-based coating material additives that impart leveling properties or surface slipping properties are effective for preventing scratches on the surface of cured films. In addition to that, in the case of utilizing ultraviolet radiation as active energy radiation, oxygen-induced inhibition of curing of the resin can be reduced as the coating material additives bleed to the air interface. Therefore, even under the conditions of low irradiation intensity, an effective degree of curing can be obtained.

Furthermore, the hard coat layer preferably contains inorganic fine particles. Preferred examples of inorganic fine particles include fine particles of inorganic compounds containing metals such as titanium, silica, zirconium, aluminum, magnesium, antimony, zinc, and tin. The average particle size of these inorganic fine particles is preferably 1000 nm or less, and more preferably in the range of 10 to 500 nm, in view of securing transmissibility of visible light. Furthermore, as inorganic fine particles have higher bonding force directed to the curable resin that forms the hard coat layer, fall-out of the inorganic fine particles from the hard coat layer can be suppressed; therefore, it is preferable for the inorganic fine particles to have photosensitive groups having photopolymerization reactivity, such as monofunctional or polyfunctional acrylates, introduced at the surface.

The thickness of the hard coat layer is preferably in the range of 0.1 $\mu$m to 50 $\mu$m, and more preferably in the range of 1 $\mu$m to 20 $\mu$m. When the thickness is 0.1 $\mu$m or more, the hard coating properties tend to be enhanced; on the contrary, when the thickness is 50 $\mu$m or less, transparency of an infrared shielding film tends to increase.

Meanwhile, the hard coat layer may also function as the infrared absorbing layer described above.

The method for forming the hard coat layer is not particularly limited, and for example, a method of preparing a coating liquid for hard coat layer containing the various components described above, subsequently applying the coating liquid using a wire bar or the like, curing the coating liquid with heat or ultraviolet ray, and thereby forming a hard coat layer, may be used.

(Average moisture content of heat ray shielding film)

According to the present invention, the average moisture content of the heat ray shielding film B constituting the heat ray shielding film unit A, which is obtained by TG-DTA before the step of press boding it to a glass substrate, is preferably 1.0% by mass or less. Although the lower limit of the moisture content is not particularly limited, considering the production conditions or the like, it is 0.1% by mass or more, and more preferably 0.2% by mass or more.

<<4: Heat ray shielding film unit>>

As illustrated in Fig. 1, the heat ray shielding film unit according to the present invention is prepared by forming an adhesive layer on a surface of the heat ray shielding film which is prepared according to the method described above.

Hereinbelow, the adhesive layer is described.

[4.1: Adhesive layer]

The heat ray shielding film unit A according to the present invention is characterized by having an adhesive layer on at least one surface of the heat ray shielding film. The adhesive layer is preferably composed of an adhesive layer. The adhesive is not particularly limited, and examples thereof include an acrylic adhesive, a silicone-based adhesive, a urethane-based adhesive, a polyvinyl butyral-based adhesive, and an ethylene-vinyl acetate-based adhesive.

The acrylic adhesive used may be any of a solvent system and an emulsion system; however, from the viewpoint that it is easy to increase the adhesive force or the like, a solvent-based adhesive is preferable, and among others, an adhesive obtainable by solution polymerization is preferred. Examples of the raw material in the case of producing such a solvent-based acrylic adhesive by solution polymerization include, as main monomers that constitute the skeleton, acrylic acid esters such as ethyl acrylate, butyl acrylate, 2-ethylhexyl acrylate, and octyl acrylate; as comonomers for enhancing the aggregating force, vinyl acetate, acrylonitrile, styrene, and methyl methacrylate; and as functional group-containing monomers for accelerating crosslinking, imparting stable adhesive force, and maintaining an adhesive force to a certain extent in the presence of water, methacrylic acid, acrylic acid, itaconic acid, hydroxyethyl methacrylate, and glycidyl methacrylate. In the adhesive layer of the laminate film, since the main polymer particularly needs high tackiness, it is particularly useful for having a low glass transition temperature (Tg), such as butyl acrylate.

In this adhesive layer, for example, a stabilizer, a surface active agent, an ultraviolet absorbing agent, a flame retardant, an antistatic agent, an oxidation inhibitor, a thermal stabilizer, a lubricating agent, a filler, a colorant, and an adhesion adjusting agent as additives can also be incorporated. Particularly, when the adhesive layer is used for window parting as in the case of the present invention, addition of an ultraviolet absorbing agent is effective even for suppressing deterioration of the infrared shielding film caused by ultraviolet radiation.

The thickness of the adhesive layer is preferably in the range of 1 $\mu$m to 100 $\mu$m, and more preferably in the range of 3 to 50 $\mu$m. When the thickness is 1 $\mu$m or more, adhesiveness tends to increase, and thus sufficient adhesive force may be obtained. On the contrary, when the thickness is 100 $\mu$m or less, transparency of the infrared shielding film is enhanced, and also, when the infrared shielding film is attached to a glass substrate and then peeled, an occurrence of cohesive destruction between adhesive layers can be prevented.

The method for forming an adhesive layer on the heat ray shielding film is not particularly limited, and for example, an adhesive coating liquid containing the adhesive is prepared and subsequently applied on the heat ray shielding film by using a wire bar or the like followed by drying to form a heat ray shielding film unit.

[4.2: Preliminary heating treatment of heat ray shielding film unit]

One characteristic of the method for manufacturing a heat ray shielding laminated glass of the present invention lies in that, during a preliminary heating step before attaching the heat ray shielding film unit prepared by the above method to a glass substrate, a heating treatment is carried out at conditions for having the average moisture content of 1.0% by mass or less . Specifically, as for the temperature for the preliminary heating of the heat ray shielding film unit during the preliminary heating step, the step is preferably performed in the temperature range of (Tg - 30°C) to (Tg + 10°C) relative to Tg of a transparent resin film constituting the heat ray shielding film.

[4.3: Average moisture content of heat ray shielding film unit)

The present invention is characterized in that the average moisture content of the heat ray shielding film unit A in a heat ray shielding laminated glass, which is produced by press bonding as described above, is 1.0% by mass or less as determined by TG-DTA (simultaneous measurement of thermogravimetry · differential thermal analysis). It is preferable that the average moisture content of the heat ray shielding film unit A, which is obtained by TG-DTA before the step of press boding it to a glass substrate, is preferably 1.0% by mass or less. Although the lower limit of the moisture content is not particularly limited for each, considering the production conditions or the like, it is 0.1% by mass or more, and more preferably 0.2% by mass or more.

«5: Glass substrate»

Subsequently, explanations are given for a glass substrate which is applied for the laminated glass of the present invention.

For the glass substrate according to the present invention, a commercially available glass may be used. There are no particular limitations on the kind of the glass; however, usually, soda lime silica glass is suitably used. In this case, colorless transparent glass is desirable, and colored transparent glass is also acceptable.

Furthermore, between the two sheets of glass substrates, the glass substrate on the outdoor side that is closer to incident light is preferably colorless transparent glass. Also, the glass substrate on the indoor side that is far from the light incident side is preferably green-colored transparent glass or deep-colored transparent glass. The green-colored transparent glass preferably has ultraviolet absorption performance and infrared absorption performance. It is because when these are used, sunlight energy can be reflected as much as possible on the outdoor side, and the sunlight transmittance of the laminated glass can be further reduced.

The green-colored transparent glass is not particularly limited, but for example, soda lime silica glass containing iron may be suitably used. An example thereof may be soda lime silica glass containing 0.3 to 1% by mass of total iron in terms of $Fe_2O_3$ in a soda lime silica-based mother glass. Furthermore, since absorption of light having a wavelength in the near-infrared region is such that absorption by divalent iron in the total iron is predominant, it is preferable that the mass of FeO (divalent iron) is 20 to 40% by mass of the total iron in terms of $Fe_2O_3$.

In order to impart ultraviolet absorption performance, a method of adding cerium or the like to soda lime silica-based mother glass may be used. Specifically, it is preferable to use a soda lime silica glass substantially having the following composition: $SiO_2$: 65 to 75% by mass, $Al_2O_3$: 0.1 to 5% by mass, $Na_2O+K_2O$: 10 to 18% by mass, CaO: 5 to 15% by mass, MgO: 1 to 6% by mass, total iron in terms of $Fe_2O_3$: 0.3 to 1% by mass, total cerium and/or $TiO_2$ in terms of $CeO_2$: 0.5 to 2% by mass.

Furthermore, there are no particular limitations on the deep-colored transparent glass, but a suitable example may be a soda lime silica glass containing iron at a high concentration.

For a case of using the laminated glass of the present invention for the windows of vehicles and the like, the thicknesses of the indoor side glass substrate and the outdoor side glass substrate are both preferably in the range of 1.5 to 3.0 mm. In this case, the indoor side glass substrate and the outdoor side glass substrate may have the same thickness, or may have different thicknesses. For a case of using the laminated glass for car windows, for example, the indoor side glass substrate and the outdoor side glass substrate may be both made to have a thickness of 2.0 mm or to have a thickness of 2.1 mm. Furthermore, for a case of using the laminated glass for car windows, for example, when the thickness of the indoor side glass substrate is set to be less than 2 mm, and the thickness of the outdoor side glass substrate is set to be slightly more than 2 mm, the total thickness of the laminated glass substrates can be reduced, and the laminated glass can resist any external force on the outside of the car. The indoor side glass substrate and the outdoor side glass substrate may have a flat shape or may have a curved shape. Since windows for vehicles, particularly car windows, are frequently curved, the shape of the indoor side glass substrate and the outdoor side glass substrate frequently has a curved shape. In this case, the heat ray shielding film is installed on the concave side of the outdoor side glass substrate. Furthermore, if necessary, three or more sheets of glass substrates can also be used.

Examples

Hereinbelow, the present invention is described specifically by referring to Examples, but the present invention is not intended to be limited to these. Meanwhile, in the Examples, the term "%" is used; however, unless particularly stated otherwise, it represents "% by mass".

Example 1

<<Production of laminated glass>>

[Production of laminated glass 1]

[Preparation of coating liquid for forming heat ray shielding layer]

(Preparation of coating liquid L1 for low refractive index layer)

<Preparation of colloidal silica, dispersion liquid L1>

By adding pure water to have 1000 parts after mixing and dispersing each additive described below, the colloidal silica dispersion liquid L1 was prepared.

10% by mass aqueous solution of metal oxide particles (colloidal silica, manufactured by Nissan Chemical Industries, Limited, SNOWTEX (registered trademark) OXS) (680 parts)

4.0% by mass aqueous solution of polyvinyl alcohol (manufactured by KURARAY CO., LTD, PVA-103: degree of polymerization degree; 300, degree of saponification; 98.5% by mol) (30 parts)

3.0% by mass aqueous solution of boric acid (150 parts)

<Preparation of coating liquid for low refractive index layer>

Subsequently, the colloidal silica dispersion liquid L1 thus obtained was heated to 45°C, and 760 parts of an aqueous solution containing 4.0% by mass of a polyvinyl alcohol (manufactured by Japan Vam & Poval Co., Ltd., JP-45: degree of polymerization 4500, degree of saponification 86.5 to 89.5% by mol) were added thereto with stirring. Thereafter, 40 parts of an aqueous solution containing 1.0% by mass of a betaine-based surface active agent (manufactured by Kawaken Fine Chemical Co., Ltd., SOFTAZOLINE (registered trademark) LSB-R) were added thereto, and thus a coating liquid L1 for low refractive index layer was prepared.

(Preparation of coating liquid H1 for high refractive index layer)

<Preparation of rutile type titanium oxide for core constituting core · shell particles>

An aqueous suspension liquid of titanium oxide was prepared by suspending titanium oxide hydrate in water to obtain a concentration of 100 g/L in terms of $TiO_2$. To 10 L (liter) of the suspension, 30 L of an aqueous solution of sodium hydroxide (concentration: 10 mol/L) was added with stirring, and then the mixture was heated to 90°C and aged for 5 hours. Subsequently, the mixture was neutralized using hydrochloric acid, and after filtration, it was washed using water. Meanwhile, for the reaction (treatment) described above, the raw material titanium oxide hydrate was obtained by subjecting an aqueous solution of titanium sulfate to a thermal hydrolysis treatment according to a known technique.

The base-treated titanium compound was suspended in pure water to obtain a concentration of 20 g/L in terms of $TiO_2$. Citric acid was added thereto with stirring in an amount of 0.4% by mol relative to the amount of $TiO_2$. Thereafter, the mixture was heated, and when the temperature of the mixed sol liquid reached 95°C, conc. hydrochloric acid was added thereto to obtain a hydrochloric acid concentration of 30 g/L. While the temperature of the liquid was maintained at 95°C, the mixed liquid was stirred for 3 hours, and thus a titanium oxide sol liquid was prepared.

Furthermore, the titanium oxide sol liquid was dried at 105°C for 3 hours, and thus powdery fine particles of titanium oxide were obtained. The powdery fine particles of titanium oxide were subjected to X-ray diffraction using Model JDX-3530 manufactured by JEOL DATUM Ltd., and it was confirmed that the powdery fine particles were rutile type titanium oxide fine particles. Furthermore, the volume average particle size of the fine particles was 10 nm.

Then, a 20.0% by mass water-based dispersion liquid of titanium oxide sol containing rutile type titanium oxide fine particles having a volume average particle size of 10 nm thus obtained was added to 4 kg of pure water, and thus a sol liquid to be used as core particles was obtained.

<Preparation of core · shell particles by shell coating>

0.5 kg of a 10.0% by mass water-based dispersion liquid of titanium oxide sol was added to 2 kg of pure water, and the mixture was heated to 90°C. Subsequently, 1.3 kg of an aqueous solution of silicic acid prepared to have a concentration of 2.0% by mass in terms of $SiO_2$ was slowly added thereto, and subjected to a heating treatment at 175°C for 18 hours in an autoclave, and the mixture was further concentrated. Thus, a sol liquid (solid content concentration: 20% by mass) of core · shell particles (average particle size: 10 nm) in which the core particles are formed of titanium oxide having a rutile structure and the coating layer is formed of $SiO_2$, was obtained.

<Preparation of coating liquid for high refractive index layer>

28.9 parts of the sol liquid containing core · shell particles at a solid content concentration of 20.0% by mass obtained as described above, 10.5 parts of a 1.92% by mass aqueous solution of citric acid, 2.0 parts of a 10% by mass aqueous solution of a polyvinyl alcohol (manufactured by Kuraray Co., Ltd., PVA-103: degree of polymerization 300, degree of saponification 98.5% by mol), and 9.0 parts of a 3% by mass aqueous solution of boric acid were mixed, and thus a core · shell particle dispersion liquid H1 was prepared.

Subsequently, while the core · shell dispersion liquid H1 was stirred, 16.3 parts of pure water and 33.5 parts of a 5.0% by mass aqueous solution of a polyvinyl alcohol (manufactured by Kuraray Co., Ltd., PVA-124: degree of polymerization 2400, degree of saponification 98 to 99% by mol) as a polyvinyl alcohol (A) were added thereto. Furthermore, 0.5 part of a 1.0% by mass aqueous solution of a betaine-based surface active agent (manufactured by Kawaken Fine Chemical Co., Ltd., SOFTAZOLINE (registered trademark) LSB-R) was added thereto, and 1000 parts in total of a coating liquid H1 for high refractive index layer was prepared using pure water.

[Preparation of heat ray shielding film 1]

(Forming of heat ray shielding layer 1)

While the coating liquid L1 for low refractive index layer and the coating liquid H1 for high refractive index layer described above were maintained at 45°C, five layers of low refractive index layers and four layers of high refractive index layers were alternately applied into nine layers in total by simultaneous multilayer coating, on a polyethylene terephthalate film (abbreviated name: PET film, Tg: 75°C, manufactured by TOYOBO CO., LTD., polyethylene terephthalate film "COSMOSHINE A4300") as a transparent resin film having a thickness of 50 μm and heated to 45°C, using a slide hopper coating apparatus capable of multilayer coating, such that the film thicknesses upon drying of the respective high refractive index layers and the low refractive index layers would be 130 nm.
Immediately after coating, cold air at 5°C was blown, and thus the layers were set. At that time, the time taken until nothing adhered to the finger even if the surface was touched with a finger (set time) was 5 minutes . After completion of setting, hot air at 80°C was blown to dry the layers, and thus a refractive index layer unit composed of nine layers was produced.
The refractive index layer unit composed of nine layers was formed two more times on the above nine-layer refractive index layer unit, and thus the heat ray shielding layer 1 composed of 27 layers in total was produced.

(Forming of hard coat layer)

7.5 parts by mass of a ultraviolet-curable hard coating material (UV-7600B, manufactured by Nippon Synthetic Chemical Industry Co., Ltd.) was added to 90 parts by mass of a methyl ethyl ketone solvent, and 0.5 part by mass of a photopolymerization initiator (IRGACURE (registered trademark) 184, manufactured by BASF Japan Ltd.) was added thereto. The mixture was mixed with stirring. Subsequently, 2 parts by mass of an ATO powder (ultrafine particulate ATO, manufactured by Sumitomo Metal Mining Co., Ltd.) was added to the mixed liquid, and the mixture was stirred at a high speed with a homogenizer. Thus, a coating liquid for hard coat layer was prepared.
On the PET film (polyethylene terephthalate film) on the opposite side of the surface where the heat ray shielding layer 1 obtained as described above was formed, the coating liquid for hard coat layer was applied using a wire bar so as to obtain a dry film thickness of 3 μm, and the coating liquid was dried with hot air at 70°C for 3 minutes. Thereafter, curing was carried out in air in an amount of irradiation of 400 mJ/cm$^2$ using a ultraviolet curing apparatus (using a high pressure mercury lamp) manufactured by Eye Graphics Co., Ltd. to form a hard coat layer having an infrared absorption property. Accordingly, the heat ray shielding film 1 was produced.

(Storage of heat ray shielding film 1)

The heat ray shielding film 1 which has been prepared in the above was stored for 24 hours in an environment with 25°C and relative humidity of 55%.

(Preliminary heating treatment of heat ray shielding film 1)

According to the preliminary heating step having a constitution shown in the Step b of Fig. 2, the heat ray shielding film 1 was subjected to a preliminary heating treatment for 20 minutes which uses a flat heater as the heating means H at conditions to have the surface temperature of the heat ray shielding film 1 at 65°C.

(Pseudo-press bonding treatment)

Next, immediately after completing the preliminary heating treatment of the heat ray shielding film 1, as illustrated in (a) of Fig. 1, the glass substrate 5B on an outdoor side (a clear glass having a thickness of 3 mm, visible transmittance Tv: 91%, sunlight transmittance Te: 86%), the adhesive layer 4B (a film formed of polyvinyl butyral having a thickness of 380 μm), the heat ray shielding film (B) 1 obtained after preliminary heating treatment (it is disposed such that 1 heat ray shielding layer 3 faces the adhesive layer 4B side), the adhesive layer 4A (a film formed of polyvinyl butyral having a thickness of 380 μm), and the glass substrate 5A on an indoor side (a green glass having a thickness of 3 mm, visible transmittance Tv: 81%, sunlight transmittance Te: 63%) were laminated in this order. As shown in the Step d of Fig. 2, pseudo-press bonding was performed by nipping with a pair of press · heating roller 7 which face to each other. Pseudo-press bonding was performed at conditions including nip pressure of 500 kPa and heating temperature of 50°C to produce a temporary laminated glass.

After the pseudo-press bonding treatment, excess adhesive layer parts protruding from the edges of the glass substrates were removed.

(Main press bonding treatment)

Subsequently, the laminated glass obtained after pseudo-press bonding was transferred to an autoclave and heated at 135°C for 50 minutes for pressing and degassing to produce the laminated glass 1.

[Production of laminated glass 2 to 9]

The laminated glass 2 to 9 were produced in the same manner as the laminated glass 1, except that the heating temperature and treatment time for the preliminary heating treatment of a heat ray shielding film is changed to the conditions described in Table 1.

<<Evaluation of heat ray shielding film and laminated glass>>

[Measurement of average moisture content]

(Measurement of average moisture content 1 in heat ray shielding film alone after preliminary heating treatment)

With regard to the moisture content of the heat ray shielding film which has been obtained after completing the preliminary heating treatment, the moisture content 1 was measured for 10 samples by using EXSTAR6000 TG/DTA manufactured by Hitachi High-Technologies Corporation, which is a measurement apparatus based on TG-DTA (simultaneous measurement of thermogravimetry · differential thermal analysis). Then, the average value was obtained therefrom.

(Measurement of average moisture content 2 of heat ray shielding film unit A in laminated glass)

According to the following method, each heat ray shielding film unit A was separated from each laminated glass which has been produced above, and the moisture content 2 was measured for 10 samples by using EXSTAR6000 TG/DTA manufactured by Hitachi High-Technologies Corporation, which is a measurement apparatus based on TG-DTA (simultaneous measurement of thermogravimetry · differential thermal analysis). Then, the average value was obtained therefrom.

With regard to each laminated glass, two pairs of crusher rollers, which face to each other, were placed before and after the laminated glass and the laminated glass was transported between the rollers to crush the glass substrate while simultaneously applying an operational force and a difference in circumference speed and applying tension to the transferring film shielding unit A so that the adhered glass substrate fragments can be detached from the film shielding unit A. Water content of thus-separated film shielding unit A was measured according to the method described above. Meanwhile, the measurement operations are performed in an environment of 25°C and 55%RH.

[Evaluation of flatness of heat ray shielding film after preliminary heating treatment]

Surface of the heat ray shielding film after preliminary heating treatment was measured by a naked eye, and the flatness of the heat ray shielding film was evaluated according to the following criteria.

⊙: Surface of the heat ray shielding film after preliminary heating treatment has no occurrence of deformation or wrinkles, and thus there is favorable flatness.

○: Surface of the heat ray shielding film after preliminary heating treatment shows an occurrence of extremely minor deformation or wrinkles, but there is almost favorable flatness.

△: Surface of the heat ray shielding film after preliminary heating treatment shows an occurrence of minor deformation or wrinkles, but the deformation or wrinkles are resolved when a laminated glass is produced.

×: Surface of the heat ray shielding film after preliminary heating treatment shows an occurrence of significant deformation or wrinkles, and the deformation or wrinkles remain even after a laminated glass is produced.

[Evaluation of anti-scattering property of laminated glass: Measurement of scattering rate of laminated glass]

Each laminated glass produced above was cut to have a size of 800 mm × 1500 mm, and fixed to a clamping frame formed of channel steel by using chloroprene rubber and wood. The fixing frame was placed on a position horizontal to ground surface such that the glass substrate 5B on an outdoor side faces upward, while leaving a space relative to the ground surface. Subsequently, from 90 cm above the glass surface, a steel ball with mass of 30 kg was allowed to fall freely to the center part of the laminated glass. Then, the glass fragments separated and scattered from the laminated glass by an impact were collected, and the mass of the fragments was measured. Then, according to the following formula, the scattering rate of laminated glass was calculated. Smaller value indicates a less amount of scattering (detachment between the glass substrate and adhesive layer), and as not being affected by moisture, it indicates an excellent adhesion property between the glass substrate and adhesive layer and a high anti-scattering property of the laminated glass.

$$\text{Scattering rate of laminated glass (\%)} = (\text{Total mass of scattered glass fragments/Total mass of glass substrate constituting laminated glass}) \times 100$$

The results obtained from above are shown in Table 1.

[Table 1]

| Laminated glass number | Heat ray shielding film | | | | *1 Average moisture 2 (%) | Result of each evaluation | | Remarks |
|---|---|---|---|---|---|---|---|---|
| | Number | Preliminary heating treatment | | Average moisture content 1 (%) | | Flatness of heat ray shielding film | Scattering rate of laminated glass (%) | |
| | | Temperature (°C) | Time (minutes) | | | | | |
| 1 | 1 | 65 | 20 | 1.25 | 0.87 | ⊙ | 8.2 | Present invention |
| 2 | 2 | 65 | 30 | 1.21 | 0.68 | ⊙ | 7.8 | Present invention |
| 3 | 3 | 70 | 20 | 1.11 | 0.55 | ⊙ | 3.7 | Present invention |
| 4 | 4 | 70 | 30 | 0.92 | 0.43 | ⊙ | 3.5 | Present invention |
| 5 | 5 | 75 | 20 | 0.64 | 0.27 | ⊙ | 2.1 | Present invention |
| 6 | 6 | 75 | 30 | 0.45 | 0.18 | ○ | 1.3 | Present invention |
| 7 | 7 | 90 | 20 | 0.38 | 0.12 | △ | 0.9 | Present invention |
| 8 | 8 | 40 | 20 | 1.65 | 1.48 | ⊙ | 14.1 | Comparative Example |
| 9 | 9 | - | - | 3.45 | 2.85 | ⊙ | 18.9 | Comparative Example |
| Transparent resin film: PET Tg = 75°C *1: Average moisture content 2 of the heat ray shielding film unit A which has been separated from the laminated glass produced above. | | | | | | | | |

As it is clearly shown from the results described in Table 1, with regard to the laminated glass using heat ray shielding film in which moisture content is controlled by a preliminary heating treatment, the laminated glass of the present invention in which the average moisture content of the heat ray shielding film unit A after forming a laminated glass is 1.0% by mass or less shows an excellent adhesion property between the adhesive layer constituting the heat ray shielding film unit and the glass substrate even when the glass substrate is damaged by an external impact, and thus there is a small scattering amount of the laminated glass. Furthermore, by performing the preliminary heating treatment of the heat ray shielding film in the temperature range of -30 to +10°C of Tg of a transparent resin film which constitutes the heat ray shielding film, it is possible to obtain a heat ray shielding film with excellent flatness and low moisture content without having a deformation of transparent resin film caused by heating.

Example 2

<<Production of laminated glass>>

[Production of laminated glass 11]

[Preparation of heat ray shielding film 11]

The heat ray shielding layer 11 consisting of total 27 layers of a refractive index layer was formed, in the same manner as production of the heat ray shielding film 1 described in Example 1, on a PET film (as defined above, Tg: 75°C) having thickness of 50 μm as a transparent resin film. Subsequently, on a PET film (polyethylene terephthalate film) which is opposite to the surface having the heat ray shielding layer 11 formed thereon, a hard coat layer having an infrared ray absorbing property was formed in the same manner as Example 1 to produce the heat ray shielding film 11.

[Preparation of heat ray shielding film unit 11]

On both surface of the heat ray shielding film 11 which has been prepared above, polyvinyl butyral was coated using a wire bar to have thickness of 380 μm. By drying with hot air at 60°C for 3 minutes, the adhesive layer 4A and 4B were formed, and thus the heat ray shielding film unit 11 was prepared.

(Storage of heat ray shielding film unit 11)

The heat ray shielding film unit 11 which has been prepared in the above was stored for 24 hours in an environment with 25°C and relative humidity of 55%.

(Preliminary heating treatment of heat ray shielding film unit 11)

According to the preliminary heating step having a constitution shown in the Step 2 of Fig. 3, the heat ray shielding film unit 11 was subjected to a preliminary heating treatment for 20 minutes using a flat heater to have the surface temperature of the heat ray shielding film unit 11 at 65°C.

(Pseudo-press bonding treatment)

Next, immediately after completing the preliminary heating treatment of the heat ray shielding film unit 11, as illustrated in Fig. 1(a), the glass substrate 5B on an outdoor side (a clear glass having a thickness of 3 mm, visible transmittance Tv: 91%, sunlight transmittance Te: 86%) and the glass substrate 5A on an indoor side (a green glass having a thickness of 3 mm, visible transmittance Tv: 81%, sunlight transmittance Te: 63%) were bonded to both surfaces of the heat ray shielding film unit 11. Then, as shown in the Step 4 of Fig. 3, pseudo-press bonding was performed by nipping with a pair of press · heating roller 7 which face to each other. Pseudo-press bonding was performed at conditions including nip pressure of 500 kPa and heating temperature of 50°C to produce a temporary laminated glass.

After the pseudo-press bonding treatment, excess adhesive layer parts protruding from the edges of the glass substrates were removed.

(Main press bonding treatment)

Subsequently, the laminated glass obtained after pseudo-press bonding was transferred to an autoclave and heated at 135°C for 50 minutes for pressing and degassing to produce the laminated glass 11.

[Production of laminated glass 12 to 19]

The laminated glass 12 to 19 were produced in the same manner as the laminated glass 11, except that the heating temperature and treatment time for the preliminary heating treatment of a heat ray shielding film unit is changed to the conditions described in Table 2.

«Evaluation of heat ray shielding film unit and laminated glass»

[Measurement of average moisture content]

(Measurement of average moisture content 3 in heat ray shielding film unit unit A alone after preliminary heating treatment)

With regard to the moisture content of the heat ray shielding film unit A which has been obtained after completing the preliminary heating treatment, the moisture content 3 was measured for 10 samples by using EXSTAR6000 TG/DTA manufactured by Hitachi High-Technologies Corporation, which is a measurement apparatus based on TG-DTA (simultaneous measurement of thermogravimetry · differential thermal analysis). Then, the average value was obtained therefrom.

(Measurement of average moisture content 2 of heat ray shielding film unit A in laminated glass)

Each heat ray shielding film unit A was separated, by the same method as the method described in Example 1, from each laminated glass which has been produced above, and the moisture content 2 was measured for 10 samples by using EXSTAR6000 TG/DTA manufactured by Hitachi High-Technologies Corporation, which is a measurement apparatus based on TG-DTA (simultaneous measurement of thermogravimetry · differential thermal analysis). Then, the average value was obtained therefrom.

[Evaluation of flatness of heat ray shielding film unit A after preliminary heating treatment]

Surface of the heat ray shielding film unit A after preliminary heating treatment was measured by a naked eye, and the flatness of the heat ray shielding film unit A was evaluated according to the following criteria.
⊙: Surface of the heat ray shielding film unit A after preliminary heating treatment has no occurrence of deformation or wrinkles, and thus there is favorable flatness.

○: Surface of the heat ray shielding film unit A after preliminary heating treatment shows an occurrence of extremely minor deformation or wrinkles, but there is almost favorable flatness.
△: Surface of the heat ray shielding film unit A after preliminary heating treatment shows an occurrence of minor deformation or wrinkles, but the deformation or wrinkles are resolved when a laminated glass is produced.
×: Surface of the heat ray shielding film unit A after preliminary heating treatment shows an occurrence of significant deformation or wrinkles, and the deformation or wrinkles remain even after a laminated glass is produced.

[Evaluation of anti-scattering property of laminated glass: Measurement of scattering rate of laminated glass]

The scattering rate of a laminated glass was measured in the same manner as the method described in Example 1, and the result was used as an indicator of an anti-scattering property of a laminated glass.
The results obtained from above are shown in Table 2.

[Table 2]

| Laminated glass number | Heat ray shielding film | | | | *1 Average moisture content 2 (%) | Result of each evaluation | | Remarks |
| | Number | Preliminary heating treatment | | Average moisture content 3 (%) | | Flatness of heat ray shielding film | Scattering rate of laminated glass (%) | |
| | | Temperature (°C) | Time (minutes) | | | | | |
| 11 | 11 | 63 | 20 | 1.14 | 0.83 | ⊙ | 8.0 | Present invention |
| 12 | 12 | 63 | 30 | 0.92 | 0.65 | ⊙ | 7.5 | Present invention |
| 13 | 13 | 72 | 20 | 0.87 | 0.53 | ⊙ | 3.6 | Present invention |
| 14 | 14 | 72 | 30 | 0.78 | 0.42 | ⊙ | 3.2 | Present invention |
| 15 | 15 | 75 | 20 | 0.45 | 0.25 | ⊙ | 2.0 | Present invention |
| 16 | 16 | 75 | 30 | 0.29 | 0.16 | ○ | 1.3 | Present invention |
| 17 | 17 | 92 | 20 | 0.11 | 0.10 | Δ | 0.7 | Present invention |
| 18 | 18 | 42 | 20 | 1.58 | 1.43 | ⊙ | 14.0 | Comparative Example |
| 19 | 19 | - | - | 3.36 | 2.80 | ⊙ | 18.5 | Comparative Example |
| Transparent resin film: PET Tg = 75°C *1: Average moisture content 2 of the heat ray shielding film unit A which has been separated from the laminated glass produced above. | | | | | | | | |

As it is clearly shown from the results described in Table 2, with regard to the laminated glass using heat ray shielding film unit A in which moisture content is controlled by a preliminary heating treatment, the laminated glass of the present invention in which the average moisture content of the heat ray shielding film unit A after forming a laminated glass is 1.0% by mass or less shows an excellent adhesion property between the adhesive layer constituting the heat ray shielding film unit and the glass substrate even when the glass substrate is damaged by an external impact, and thus there is a small scattering amount of the laminated glass. Furthermore, by performing the preliminary heating treatment of the heat ray shielding film unit in the temperature range of (Tg - 30°C) to (Tg + 10°C) of a transparent resin film which constitutes the heat ray shielding film unit, that is, the treatment is performed in the range of 45 to 85°C when Tg of PET is 75°C, it is possible to obtain a heat ray shielding film unit with excellent flatness and low moisture content without having a deformation of transparent resin film caused by heating.

Example 3

<<Production of laminated glass>>

[Preparation of heat ray shielding film 21 to 28]

The heat ray shielding film 21 to 28 were prepared in the same manner as production of the heat ray shielding film 1 of Example 1 except that the transparent resin film was changed to a PET film (as defined above, Tg: 75°C) to a PEN film (polyethylene naphthalate film, Teonex Q81, manufactured by Teijin DuPont, Tg: 113°C) having thickness of 50 $\mu$m, and modifications were made to have the conditions for preliminary heating described in Table 3.

[Production of laminated glass 21 to 28]

The laminated glass 21 to 28 were produced in the same manner as the laminated glass 1 described in Example 1, except that the heat ray shielding film 21 to 28 which have been prepared above were used instead of the heat ray shielding film 1.

<<Evaluation of heat ray shielding film and laminated glass>>

The average moisture content 1 in the above-prepared heat ray shielding film alone after a preliminary heating treatment and the average moisture content 2 measured by separating the heat ray shielding film unit A constituting the laminated glass were measured by the same method as the method described in Example 1.
Furthermore, the flatness of the above-prepared heat ray shielding film alone after a preliminary heating treatment and scattering rate of the laminated glass (anti-scattering property) were measured in the same manner as Example 1, and the results are shown in Table 3.

[Table 3]

| Laminated glass number | Heat ray shielding film | | | | *1 Average moisture content 2 (%) | Result of each evaluation | | Remarks |
|---|---|---|---|---|---|---|---|---|
| | Number | Preliminary heating treatment | | Average moisture content 1 (%) | | Flatness of heat ray shielding film | Scattering rate of laminated glass (%) | |
| | | Temperature (°C) | Time (minutes) | | | | | |
| 21 | 21 | 95 | 10 | 1.12 | 0.72 | ⊙ | 6.8 | Present invention |
| 22 | 22 | 95 | 15 | 0.88 | 0.48 | ⊙ | 4.9 | Present invention |
| 23 | 23 | 100 | 10 | 0.76 | 0.28 | ⊙ | 2.1 | Present invention |
| 24 | 24 | 105 | 10 | 0.65 | 0.21 | ⊙ | 1.7 | Present invention |
| 25 | 25 | 120 | 10 | 0.60 | 0.17 | ⊙ | 1.1 | Present invention |
| 26 | 26 | 130 | 10 | 0.43 | 0.10 | ○ | 0.5 | Present invention |
| 27 | 27 | 75 | 5 | 1.70 | 1.22 | ⊙ | 13.1 | Comparative Example |
| 28 | 28 | - | - | 3.45 | 2.85 | ⊙ | 18.9 | Comparative Example |
| Transparent resin film: PEN Tg = 113°C *1: Average moisture content 2 of the heat ray shielding film unit A which has been separated from the laminated glass produced above. | | | | | | | | |

As it is clearly shown from the results described in Table 3, with regard to the laminated glass using heat ray shielding film unit A in which moisture content is controlled by a preliminary heating treatment, even when the transparent resin film is changed to a PEN with Tg of 113°C, the laminated glass of the prevent invention in which the average moisture content of the heat ray shielding film unit A after forming a laminated glass is 1.0% by mass or less shows an excellent adhesion property between the adhesive layer constituting the heat ray shielding film unit and the glass substrate even when the glass substrate is damaged by an external impact, and thus there is a small scattering amount of the laminated glass. Furthermore, by performing the preliminary heating treatment of the heat ray shielding film unit in the temperature range of (Tg - 30°C) to (Tg + 10°C) of a transparent resin film which constitutes the heat ray shielding film, that is, the treatment is performed in the range of 83 to 143°C when Tg of PEN is 113°C, it is possible to obtain a heat ray shielding film unit with excellent flatness and low moisture content without having a deformation of transparent resin film caused by heating.

Industrial Applicability

The heat ray shielding laminated glass of the present invention has excellent flatness and adhesion between a glass substrate and a heat ray shielding film unit, and has a reduced glass scattering rate even when the glass substrate is damaged by an external impact. As such, it can be preferably used for an automobile, an airplane, or constructional application in which a high anti-penetrating property and a high anti-scattering property of glass are required.

Reference Signs List

| 1 | Heat ray shielding laminated glass |
| 2 | Transparent resin film |
| 3, 3A, 3B | Heat ray shielding layer |
| 4A, 4B | Adhesive layer |
| 5A, 5B | Glass substrate |
| 7 | Press roller |
| 8 | Autoclave |
| A | Heat ray shielding film unit |
| B | Heat ray shielding film |
| H | Heating means |

**Claims**

1.  A heat ray shielding laminated glass formed by press bonding of a pair of glass substrates on both surfaces of a heat ray shielding film unit A comprising a heat ray shielding film having at least one heat ray shielding layer on a transparent resin film, and at least one adhesive layer, wherein
    the heat ray shielding film unit A has an average moisture content of 1.0% by mass or less as determined by TG-DTA (simultaneous measurement of thermogravimetry differential thermal analysis).

2.  The heat ray shielding laminated glass according to claim 1, wherein the average moisture content of the heat ray shielding film unit A is 1.0% by mass or less as determined by TG-DTA before press bonding with the glass substrate.

3.  The heat ray shielding laminated glass according to claim 1 or 2, wherein the average moisture content of the heat ray shielding film which constitutes the heat ray shielding film unit A is 1.0% by mass or less as determined by TG-DTA before press bonding with the glass substrate.

4.  The heat ray shielding laminated glass according to any one of claims 1 to 3, wherein the average moisture content of the heat ray shielding film unit A is 0.5% by mass or less as determined by TG-DTA .

5.  The heat ray shielding laminated glass according to any one of claims 1 to 4, wherein the heat ray shielding film unit A has a constitution of having the heat ray shielding film, which has a heat ray shielding layer on both surfaces of the transparent resin film, and an adhesive layer on each of the heat ray shielding layer.

6.  The heat ray shielding laminated glass according to any one of claims 1 to 5, wherein the heat ray shielding layer is an infrared reflective layer containing a water soluble binder resin.

7. The heat ray shielding laminated glass according to claim 6, wherein the infrared reflective layer further contains metal oxide particles.

8. A method for manufacturing a heat ray shielding laminated glass, the method comprising a step of producing a heat ray shielding film by forming at least one layer of a heat ray shielding layer on a transparent resin film, a step of producing the heat ray shielding film unit A by forming an adhesive layer on at least one surface of the heat ray shielding film, a step of pseudo-press bonding by disposing a glass substrate on both surfaces of the heat ray shielding film unit A, and a step of main press bonding by performing a heat and pressure treatment of members which have been subjected to pseudo-press bonding to produce a heat ray shielding laminated glass, wherein a step for preliminary heating the heat ray shielding film or the heat ray shielding film unit A is included, and the preliminary heating step is a step in which the heat ray shielding film or the heat ray shielding film unit A is heated such that the average moisture content of the heat ray shielding film unit A, which is obtained by TG-DTA after forming the heat ray shielding laminated glass, is 1.0% by mass or less.

9. The method for manufacturing a heat ray shielding laminated glass according to claim 8, wherein the average moisture content of the heat ray shielding film unit A is 1.0% by mass or less as determined by TG-DTA before the step for pseudo-press bonding with the glass substrate.

10. The method for manufacturing a heat ray shielding laminated glass according to claim 8 or 9, wherein the average moisture content of the heat ray shielding film which constitutes the heat ray shielding film unit A is 1.0% by mass or less as determined by TG-DTA before press bonding with the glass substrate.

11. The method for manufacturing a heat ray shielding laminated glass according to any one of claims 8 to 10, wherein the average moisture content of the heat ray shielding film unit A after forming the heat ray shielding laminated glass is 0.5% by mass or less as determined by TG-DTA.

12. The method for manufacturing a heat ray shielding laminated glass according to any one of claims 8 to 11, wherein the preliminary heating temperature for the heat ray shielding film or the heat ray shielding film unit A during the preliminary heating step is in the temperature range of (Tg - 30°C) to (Tg + 10°C) when the glass transition temperature of a transparent resin film constituting the heat ray shielding film is Tg.

# FIG.1A

# FIG.1B

# FIG.2

STEP a

STEP b

STEP c

STEP d

STEP e

# FIG.3

STEP 1 A

STEP 2 H

A

H

STEP 3 5B

A

5A

STEP 4

7

1

5B

A

5A

7

STEP 5

8

1

## INTERNATIONAL SEARCH REPORT

International application No.

PCT/JP2014/057243

### A. CLASSIFICATION OF SUBJECT MATTER
C03C27/12(2006.01)i

According to International Patent Classification (IPC) or to both national classification and IPC

### B. FIELDS SEARCHED

Minimum documentation searched (classification system followed by classification symbols)
C03C27/12, B32B17/00

Documentation searched other than minimum documentation to the extent that such documents are included in the fields searched
Jitsuyo Shinan Koho        1922–1996   Jitsuyo Shinan Toroku Koho    1996–2014
Kokai Jitsuyo Shinan Koho   1971–2014   Toroku Jitsuyo Shinan Koho    1994–2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-6798 A  (Asahi Glass Co., Ltd.),<br>12 January 2012 (12.01.2012),<br>claims; paragraphs [0015], [0016], [0043],<br>[0059]; examples<br>(Family: none) | 1–11<br>12 |
| Y<br>A | JP 2013-505188 A  (Pilkington Group Ltd.),<br>14 February 2013 (14.02.2013),<br>claims; examples<br>& US 2012/0176656 A1    & WO 2011/033313 A1 | 1–11<br>12 |
| Y | WO 2012/176891 A1  (Konica Minolta Holdings,<br>Inc.),<br>27 December 2012 (27.12.2012),<br>claims<br>(Family: none) | 6,7 |

☐ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>    12 June, 2014 (12.06.14) | Date of mailing of the international search report<br>    24 June, 2014 (24.06.14) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011073943 A
- JP 2001226153 A
- JP 5319875 A
- JP 61010483 A
- JP 1206088 A
- JP 61237681 A
- JP 63307979 A
- JP 7285265 A
- JP 7009758 A
- JP 8025795 A
- JP 57014091 A
- JP 60219083 A
- JP 60219084 A
- JP 61020792 A
- JP 61188183 A
- JP 63017807 A
- JP 4093284 A
- JP 5278324 A
- JP 6092011 A
- JP 6183134 A
- JP 6297830 A
- JP 7081214 A
- JP 7101142 A
- JP 7179029 A
- JP 7137431 A
- JP 6026530 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- US 2761419 A
- US 2761791 A
- WO 2008035669 A
- JP 7133105 A
- JP 2001233611 A

**Non-patent literature cited in the description**

- **T. T. H. JAMES.** The Theory of Photographic Process. Macmillan, 1977, 55
- Kagaku Shashin Benran. Maruzen Company, 72-75
- Shashin Kogaku no Kiso - Gin En Shashin-hen. CORONA PUBLISHING CO., LTD, 119-124
- *Research Disclosure,* December 1978, vol. 176 (17643
- Seikagaku Jiten. Tokyo Kagaku Dojin
- Shokuhin Kogyo. 1988, vol. 31, 21
- Kagaku Daijiten. Kyoritsu Shuppan Co., Ltd, 1960, 268-270
- Kakyozai Handobuku. Taiseisha, Ltd, October 1981